(19) Europäisches Patentamt
European Patent Office
Office européen des brevets

(11) **EP 1 142 336 B1**

(12) **EUROPEAN PATENT SPECIFICATION**

(45) Date of publication and mention
of the grant of the patent:
**24.09.2003 Bulletin 2003/39**

(21) Application number: **00905520.3**

(22) Date of filing: **14.01.2000**

(51) Int Cl.⁷: **H04N 7/173**

(86) International application number:
**PCT/US00/00017**

(87) International publication number:
**WO 00/042768 (20.07.2000 Gazette 2000/29)**

(54) **METHOD AND SYSTEM ALLOWING SELECTION OF PRODUCTS IN A VIDEO PRODUCTION BY USING REFERENCE IMAGES**

VERFAHREN UND SYSTEM ZUR AUSWAHL VON PRODUKTEN IN EINER VIDEO PRODUKTION UNTER VERWENDUNG VON REFERENZBILDERN

PROCEDE ET SYSTEME PERMETTANT LA SELECTION DE PRODUITS DANS UNE PRODUCTION VIDEO AU MOYEN D'IMAGES DE REFERENCE

(84) Designated Contracting States:
**AT BE CH CY DE DK ES FI FR GB GR IE IT LI LU MC NL PT SE**

(30) Priority: **15.01.1999 US 231283**
**15.01.1999 US 232750**

(43) Date of publication of application:
**10.10.2001 Bulletin 2001/41**

(73) Proprietor: **Grischa Corporation**
**Hillsborough, California 94010-6547 (US)**

(72) Inventors:
• **KAISER, David, H.**
**Hillsborough, CA 94010 (US)**
• **LASH, Todd**
**Oakland, CA 94611 (US)**
• **WEBER, Jay, C.**
**Menlo Park, CA 94025 (US)**

(74) Representative:
**von Samson-Himmelstjerna, Friedrich R., Dipl.-Phys.**
**SAMSON & PARTNER**
**Widenmayerstrasse 5**
**80538 München (DE)**

(56) References cited:
EP-A- 0 596 823          EP-A- 0 810 790
WO-A-97/33434          WO-A-97/38529
WO-A-97/41690          WO-A-98/17064
US-A- 5 708 845          US-A- 5 818 935

• SIMONSON J ET AL: "Version augmented URIs for reference permanencevia an Apache module design" COMPUTER NETWORKS AND ISDN SYSTEMS,NL,NORTH HOLLAND PUBLISHING. AMSTERDAM, vol. 30, no. 1-7, 1 April 1998 (1998-04-01), pages 337-345, XP004121413 ISSN: 0169-7552
• RIO M ET AL: "A framework for broadcasting and management of URIs" COMPUTER NETWORKS AND ISDN SYSTEMS,NL,NORTH HOLLAND PUBLISHING. AMSTERDAM, vol. 28, no. 4, 1 February 1996 (1996-02-01), pages 535-542, XP004002985 ISSN: 0169-7552

**Description**

## BACKGROUND

*FIELD*

The invention relates generally to enhanced video more particularly to video operable with networked action resources and also to the handling of resource identifiers used in connection with enhanced video.

*BACKGROUND*

Enhanced Video including Enhanced Television involves a developing set of technologies directed towards providing viewers rich and customizable interaction options in connection with elements of a video production. Conventional means of providing the enhancing interactive content involve integrated devices capable of receiving and reproducing the video production and of interactive communications with resources available over a data network.

Purveyors of products generally wish to make information relating to their products available to prospective purchasers. It is particularly desirable to provide interactive information about a product. Interactive information allows a prospective purchaser to better receive desired information about a product, participate in interactive events respecting the product, and, of course, purchase the product. Typically interactive information also provided the added convenience to prospective purchasers of not having to transcribe access information in connection with product purchases.

At a minimum, however, purveyors of products frequently wish to make an image referencing their product present in a video production. It is frequently desired that the purveyor be able to select appropriate contexts in the video production for display of an image referencing their product in order develop or maintain the distinctive quality of the image referencing their product(s) and promote contextually-driven positive associations with their product(s). Both qualitative and quantitative factors are frequently contextually relevant. Conventionally, purveyors of products arrange with authors of a video production to include a "product placement" in the video production. However, conventional product placements are unable to support interactive behavior.

A related technique for providing interactive behavior in a video production is to display a locator for a networked resource in a video production as is described, for example, in U.S. Patent 5,774,666 issued to Portuesi. Techniques similar to this may not provide a desired level of consumer acceptance in practice. Display of a locator for a networked reference may unnecessarily clutter a viewer's display. In addition, the locator may be unrecognizable by a viewer as being associated with any particular subject matter displayed on the viewer's display because of the frequently lengthy and confusing syntax of uniform network resource locators. A variation of this technique is to use so-called "hot spots." However this, too, only provides active regions on a display and a viewer may need to consult the uniform network resource locator displayed when the hot spot is active which, again, are frequently lengthy and confusing to understand, and needlessly distracting. Rather it would be desirable to have a solution in which images easily recognizable by a viewer as referencing a product could be used.

A method for providing action selections to an image referencing a product in a video prodction and a system for providing such action selections is also disclosed in WO 97 41690 A. A display system receives a data stream having successive image frame data in frame regions and Internet Universal Resource Locator (URL) data and association data in data regions between frame regions, and displays on a display monitor successive frames derived from the image frame data. The association data associates one or more image entities in successive frames with one or more URLs, and a viewer, by selecting an associated image entity in the display, causes the system to access the Internet, to connect to a source on the Internet associated with the URL, to download a web page from the source, and to display the web page in the display. The viewer may interact with the displayed web page to access further related information. However, this conventional solution does not provide a synchronisation of the content of the video production with the enhancing content.

Furthermore, WO 97 38529 A discloses a similar system and method for providing an interactive access to an information source, such as an Internet source, through a television distribution system. Disclosed is an access system which allows a user to view a television transmission and automatically request information from an information source, such as an Internet source, relating to the contents of the television transmission. The access system has an access to a commercial database, which includes resource location information relating to at least some portions of the television transmission, for example the database may include an URL associated with a product/service advertised in the television transmission. Upon the user issuing a command to request information associated with the television transmission, the disclosed access system automatically acquires the URL corresponding to the transmission and retrieves the web page to which the URL refers.

Other conventional solutions which, however, only refer to partial aspects of the present invention are disclosed in: EP-A-0 810 790, WO 98 17064 A and WO 97 38529 A.

Another conventional solution is to provide a video production dedicated to providing information about a product. This solution may be unsatisfactory for several reasons. First it may be excessively costly. Creation of the video production dedicated to providing information about a product requires all the costs incurred in producing any video production which will be far beyond the resources of many vendors. Furthermore, when as brief as a conventional commercial, it is of insufficient duration to support rich or involved interactive features which may be a necessity to effectively compete in the marketplace. Second, this solution is frequently deficient in reaching a wide audience of prospective purchasers. Typically, the audience of the video production dedicated to providing information about a product is limited to a small segment of the potential market for who the opportunity cost of viewing the dedicated video production is quite low. By contrast, video productions of

primarily entertainment value can draw large audiences. Third, there is limited availability for commercially desirable broadcasting times for a video production dedicated to providing information about a product as the commercially desirable broadcasting times conventionally are reserved for video productions of primarily entertainment value. Using conventional interactive television techniques with the video production dedicated to providing information about a product cannot eliminate these drawbacks.

It is therefore desirable that a system and method exist that allows interactive product behavior to be provided to an image referencing a product in a video production, that provides purveyors with the flexibility to select contextually appropriate segments of a video production for interactive behavior, that operates with images referencing products and other symbols easily recognizable by a viewer, that is cost effective, and that operates with video productions of the type conventionally found in commercially desirable time slots.

Given the high rate of television ownership, consumer familiarity with, and appreciation of, television, conventional Enhanced Video solutions frequently operate with widely used television broadcast signals. Such solutions typically involve encoding one or more resource identifiers into non-viewed portions of the television broadcast signals. The resource identifiers are then extracted by an integrated device which then presents to the viewer in some manner the option of interacting with enhancing resources available via the resource identifier.

Frequently, the resource identifiers are encoded in the vertical blanking interval ("VBI") of a television broadcast signal. An industry standard provided from the Electronic Industries Association ("EIA") of Arlington, VA, U.S.A. defines a system for the transport of internet Uniform Resource Locator ("URL") information using the Text-2 service of line 21 of the VBI.

The EIA standard syntax provides that the general format for transport of URL information in the VBI is to provide the URL followed by zero or more pairs of attributes and values which is then followed by a checksum. The EIA standard further indicates that, in order to preserve sufficient bandwidth for other services that use line 21 of the VBI, URL information should be limited.

Limitation on URL information can be inconvenient. While resource identifiers, including URLs, can be compact, it may be desirable that they be quite lengthy. For example, GET-based forms in compliance with the Hypertext Transfer Protocol ("HTTP") commonly involve URLs that are quite lengthy. It may also be desirable to include numerous parameter-parameter value pairs in a resource identifier to provide greater customization of interactions. It is therefore desirable that a solution exist that allows enhancing content customization through use of lengthy or parameterized resource identifiers without consuming limited bandwidth in a video production.

Another problem that arises in connection with Enhanced Video is synchronization of the content of the video production with the enhancing content. This may take on many forms. Some examples are created by the passage of time between creation of the video production and the time when enhancing interaction is desired. For example, a television program may be originally created with encoded resource identifiers to enhancing content relating to a promotion for the latest model of a vendor's product. After the passage of time, for example when the program were broadcast again as a re-run the following year, the resource identifier may no longer address the vendor's latest product because newer versions may have been released during the intervening time period. The same type of problem can arise in the context of an instructional video production. For example, the originally created encoded resource identifiers may address the scholarship, regulations, or additional instructional content appropriate at the time the video production was created. However after the passage of time, these same resource identifiers could provide enhancing content that was misleading. It would thus be advantageous that a solution exist that allows for time-appropriate enhancing content to be provided in connection with an enhanced video production.

A different time-related synchronization problem that may arise in connection with Enhanced Video stems from an inability to provide resource identifiers to appropriate enhancing content by the time for broadcast of the video production; for example, a live video feed from a sporting or news event. As the event unfolds, opportunities may arise where it would be desirable to provide enhancing content. However, it is may be impossible to predict all contingencies for which it would be desirable to provide opportunistic enhancing content. For example, during a baseball game a triple play may occur and it may be desirable to provide enhancing content about other triple plays, statistics, and the like which are available in data storage of the broadcaster or an affiliated entity. However, it would impractical or burdensome to provide resource identifiers directly to these resources. Accordingly, it would be beneficial that a solution exist that allows for opportunistic provision of enhancing content.

Yet another problem that may arise in connection with Enhanced Video is that of appropriate internationalization. Video events frequently draw international audiences, for example, Olympic and other sporting competitions, space exploration, and international conflicts. The author or publisher of video productions of such events may desire to provide distinct enhancing content for different national, or linguistic groups. However it may be inconvenient or impossible to provide separate resource identifiers in the video production for each group. Therefore it would be favorable for a solution to exist that facilitates internationalization of enhancing content.

In connection with Enhanced Video, it is further desirable that a method and system exist for providing resource identifiers to support an enhanced video production in advance of having any enhancing content and/or in advance of an arrangement that a particular entity will provide enhancing content. For example, an author of a video production may desire to generate revenue by, for example, selling the rights to provide enhancing content in connection with one or more particular resource identifiers. Such an author would desire a method and system that would allow the author to embed resource identifiers in the author's video production in a manner that would allow the author (or other entity holding appropriate rights) to sell the rights to provide enhancing content to one or several parties after creation of the video production. Conventional methods are unable to provide a solution to such an author in that typical resource identifiers specify a path that is dependent on the particular content associated with the resource identifier. Conventional redirection is also unable to provide a solution to such an author because the author may sell the rights to provide enhancing content to several different entities. Each of the several entities would typically desire to have requests for enhancing content initiated in response to selection of a resource identifier for which the entity owned the right to provide enhancing content directed to the entity's server, conventional redirection is unable to provide a solution to this type of problem.

## SUMMARY

In order to provide these and other desired features, the instant invention provides a method and system for providing action selections to an image referencing a product in a video production and a content reference architecture that may beneficially used therewith.

More specifically, the present invention provides the subject-matters of independent claims 1, 12 and 18. Preferred embodiments of the present invention are disclosed in the respective dependent claims.

According to one aspect of the present invention, a method for providing action selections to an image referencing a product in a video production is provided, said method comprising:

communicating a video production to a reproducing apparatus, said video production comprising a placement zone and a trigger zone at least partially coincident with said placement zone, wherein said trigger zone comprises a trigger resource identifier, and wherein said placement zone comprises an image referencing a product;

receiving a first request from said reproducing apparatus, said first request comprising a first resource identifier corresponding to said trigger resource identifier, said first resource identifier extracted from a video production communicated to said reproducing apparatus;

determining a second resource identifier comprising an identified parameter and parameter value associated with said parameter responsive to said first resource identifier;

redirecting said first request to said second resource identifier;

communicating to said reproducing apparatus an indication that an action selection interface associated with said product is available in response to said first request; and

communicating to said reproducing apparatus a characterization of said action selection interface, wherein said action selection interface comprises a selectable action.

Such a method may further include: receiving an indication of the selection of the selectable action; retrieving an action resource associated with the selectable action, and communicating the action resource to the reproducing apparatus. The action resource may be selected responsive to a profile of a user associated with the reproducing apparatus.

The video production may be provided in several ways including, for example, communicated over a television network, distributed in a tangible medium, or transferred over a computer network.

The indication of the action selection interface may take many forms including, for example, a visual highlight. In some illustrative methods, when the reproducing apparatus is coupled to a viewing device, the visual highlight is communicated to the viewing device only if the reproducing apparatus supports the action selection interface.

Selectable actions for use with a conforming method include, for example, a product purchase action, a promotion participation action, or an information request action.

According to a further aspect of the present invention, a method for creating a video is provided, said method comprising:

selecting a placement zone in a video production, said placement zone comprising an image referencing a product; selecting a trigger zone in said video production at least partially coincident with said placement zone; embedding a first reference in said trigger zone in said video production to said action selection interface, wherein said first reference comprises a trigger resource identifier utilized for generating a first resource identifier corresponding to said trigger resource identifier, and said first source identifier is utilized for determining a second resource identifier comprising a parameter and a parameter value associated with said parameter responsive to said first resource identifier, and wherein said first resource identifier when reproduced on compatible equipment and communicated to a display causes said action selection interface to be displayed on said reproducing apparatus, said action selection interface comprising said selectable action selectable by a viewer.

The video production may include a first track including the trigger zone and a second track including the placement zone, wherein the first and the second tracks are synchronized.

An apparatus with a processor, a memory, and an input-output system and configured for communication with a reproducing apparatus via a data network may also embody aspects of the invention. Programmed instructions may configure the apparatus to perform a method including receiving a request from a reproducing apparatus, said request corresponding to a trigger from a trigger zone in a video production communicated to the reproducing apparatus; determining whether an action selection interface associated with said request is available; and communicating a characterization of the action selection interface to the reproducing apparatus.

According to a further aspect, the present invention provides a system for providing action selections to an image referencing a product in a video production and operable for use with a reproducing apparatus configured for communication with a display, a data network, and a selection device, comprising:

a video production communication device, said communicating device communicating a video production comprising a placement zone and a trigger zone to said reproducing apparatus; and
an action resource provider configured for communication with said reproducing apparatus via said data network, said action resource provider receiving a first request from said reproducing apparatus corresponding to a trigger in said trigger zone of said video production, said first request comprising a first resource identifier, said action resource provider determining a second resource identifier comprising a identified parameter and parameter value associated with said parameter responsive to said first resource identifier to redirect said first request to said second resource identifier and to communicate a characterization of an action selection interface to said reproducing apparatus responsive to said first request, said action selection interface comprising a selectable action.

In such a system, the action resource provider may further receive a request from the reproducing apparatus corresponding to the selectable action; retrieve an action resource associated with the selectable action; and communicate an action resource associated with the selectable action to the reproducing apparatus.

According to an embodiment, the method for indexical content references in accordance with the invention may include: receiving a first request from an integrated enhanced video device (the first request including a first resource identifier and the first resource identifier is extracted from a video production provided to the enhanced video device); also, determining a second resource identifier in response to the first resource identifier; and also, redirecting the first request to the second resource identifier; and thereafter a response is sent to the integrated enhanced video device. In accordance with such a method, determining a second resource identifier may include: identifying at least one parameter, also, identifying at least one parameter value associated with the at least one parameter; and also, determining a second resource identifier that includes the parameter(s) and parameter value(s) in response to the first resource identifier. In accordance with such a method, determining a second resource identifier may include: identifying a parameter of a first type and a parameter of a second type (the parameter of a second type identified in response to a header in the request); and also, identifying a first parameter value associated with the parameter of a first type and a second parameter value associated with the parameter of a second type (the first parameter value is identified in response to an expression associated with the header). In accordance with such a method, redirecting the first request may be either an internal redirection or an external redirection; if external, it may be to a separate server or to the enhanced video device.

According to a preferred embodiment, the above system may include: a video production communication device; also, an enhanced video device configured to receive a video production from the video production communication device (the video production including, a first resource identifier) and send a request including the resource identifier via a data network; also, a first server communicating via the data network, the first server configured to receive the request, determine a second resource identifier, and redirect the request to the second resource identifier.

Such a system may also include a second server, and the second resource identifier may be addressable via the second server.

According to a preferred embodiment, the above action resource provider may include, at least, a processor, a storage, and an-input output system may be a programmed computer. Programmed instructions may configure the computer to provide special purpose computing machinery including a first request receiver for receiving a first request from a reproducing apparatus, said first request comprising a first resource identifier, said first resource identifier extracted from a video production communicated to said reproducing apparatus; a second resource identifier determiner for determining a second resource identifier responsive to said first resource identifier; and a first request redirector for redirecting said first request to said second resource identifier, wherein thereafter a response is communicated to said reproducing apparatus. The second resource identifier determiner may include, at least, a parameter identifier for identifying a parameter; a parameter value identifier for identifying a parameter value associated with said parameter; and a second resource identifier determiner for determining a second resource identifier comprising said parameter and said parameter value responsive to said first resource identifier. The second resource identifier determiner may include a parameter identifier for identifying a parameter of a first type and a parameter of a second type, wherein said parameter of a first type is identified responsive to a header in said first request; and a parameter value identifier for identifying a first parameter value associated with said parameter of a first type and a second parameter value associated with said parameter of a second type, wherein said first parameter value is identified responsive to an expression associated with said header. The first request redirector may be an internal redirector or an external redirector. If an external redirector, an external redirect message may be sent to the reproducing apparatus.

## BRIEF DESCRIPTION OF THE DRAWINGS

These and other features, aspects, and advantages of the present invention will become better understood with regard to the following description, appended claims, and accompanying drawings where:

Fig. 1  is a block diagram showing elements used with a system for providing action selections to an image referencing a product in a video production in accordance with an illustrative embodiment;

Fig. 2  depicts a video production with placement zones and trigger zones in accordance with an illustrative embodiment;

Fig. 3  depicts a reproducing apparatus in accordance with an illustrative embodiment;

Fig. 4  depicts a flow diagram for a method of creating a video production including a placement zone and a trigger zone and comprising an image referencing a product and having a selectable action available for communication to a reproducing apparatus in accordance with an illustrative embodiment;

Fig. 5  depicts a flow diagram for a method of providing action selections to an image referencing a product in a video production in accordance with an illustrative embodiment;

Fig. 6A  depicts a displayed view of an indication that an action selection interface is available in accordance with an illustrative embodiment;

Fig. 6B  depicts a displayed view of a visual highlight as an indication that an action selection interface is available in accordance with an illustrative embodiment;

Fig. 6C  depicts a displayed view of a rendered characterization of an action selection interface in accordance with an illustrative embodiment;

Fig. 6D  depicts a displayed view of a rendered characterization of an action selection interface in accordance with an illustrative embodiment;

Fig. 7  depicts a flow diagram for a method of implementing a promotion participation action in accordance with an illustrative embodiment;

Fig. 8  depicts a flow diagram for a method of implementing a information request action in accordance with an illustrative embodiment;

Fig. 9 depicts a flow diagram for a method of implementing a product purchase action in accordance with an illustrative embodiment; and

Fig. 10 depicts a computer system capable of being configured to embody aspects of the invention in accordance with an illustrative embodiment.

Fig. 11 depicts a flow diagram for a method of creating a video production including indexical content references in accordance with an illustrative embodiment;

Fig. 12 is a block diagram of elements in an operating environment of an illustrative embodiment;

Fig. 13 depicts a flow diagram of a method for providing indexical triggers in an enhanced video production;

Fig. 14 depicts a flow diagram of a method for a second URI generation procedure;

Fig. 15 depicts a block diagram of a system for encoding one or more series of resource identifiers in a video production in accordance with an illustrative embodiment; and

Fig. 16 depicts a flow diagram of a method for encoding one or more series of resource identifiers in a video production in accordance with an illustrative embodiment.

## DETAILED DESCRIPTION

### NOTATIONS AND NOMENCLATURE

(1) http://<server name>/<videoprod>/<position>
(2) http://<server name>/p/<project>/<name1>=<value1>/<name2>=<value2>/<name3>=/start.html Action Selection Interface is abbreviated "ASI" "Product." As used herein, the term "product" includes, at least, goods, services, collective entities, and certifications.

### DESCRIPTION OF FIGURES

While this invention is susceptible of embodiment in many different forms, there are described herein in detail illustrative embodiments with the understanding that the present disclosure is to be considered as an example of the principles of the invention and is not intended to limit the invention to the embodiments illustrated.

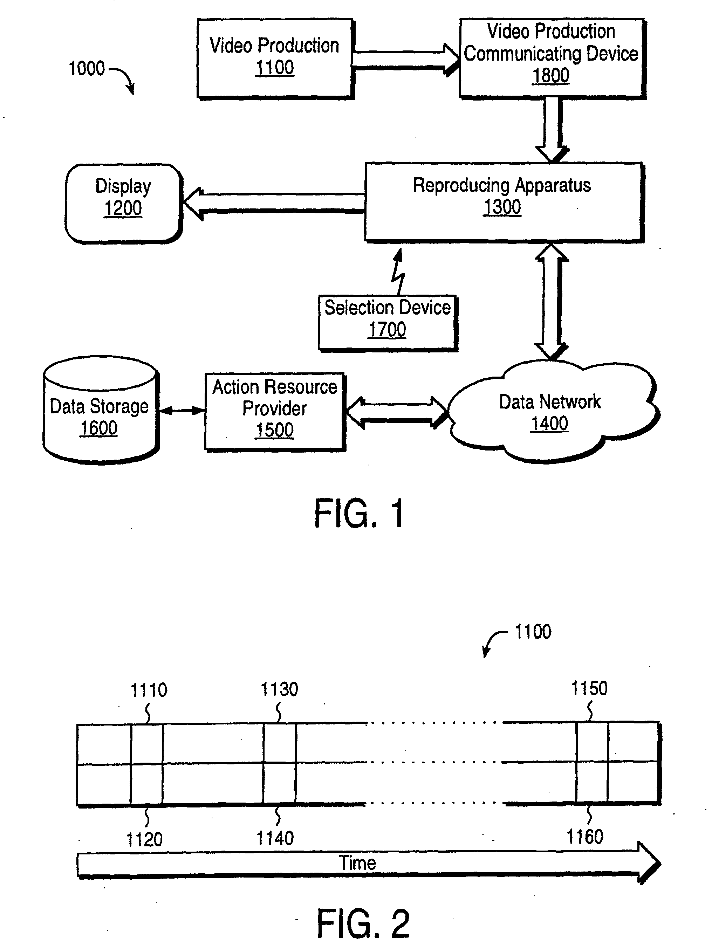

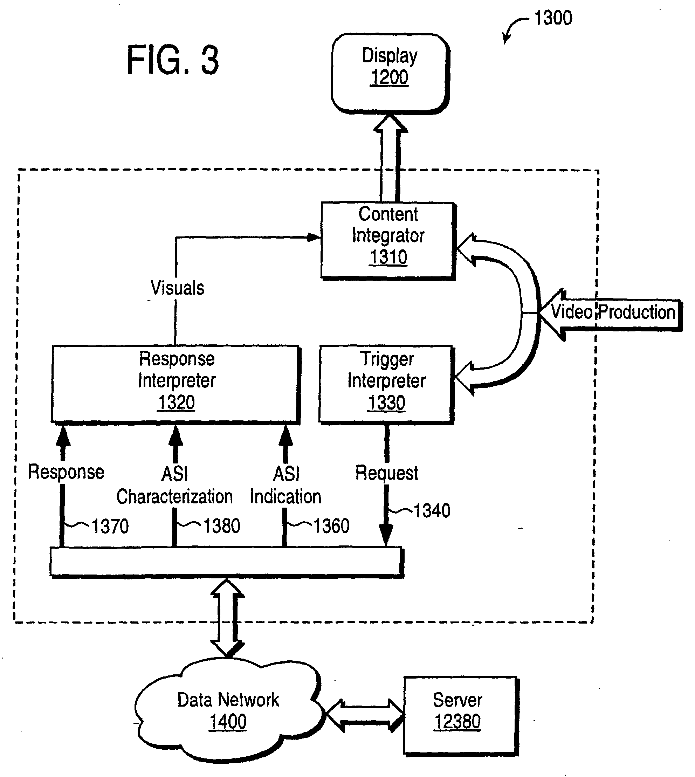

Fig. 1 shows a block diagram of the system elements **1000** used in conjunction with an illustrative embodiment. In operation, a video production **1100** is provided to a video production communicating device **1800** which communicates the video production **1100** to a reproducing apparatus **1300**. The video production **1100** is described in greater detail in connection with **Fig. 2** and the reproducing apparatus **1300** is described in greater detail in connection with **Fig. 3**.

The video production **1100** may be in a tangible medium, including, for example, video tape, video disc, or digital video disc (DVD). In some embodiments the video production **1100** is transferred over a computer network. The video production **1100** could be streamed or all, or substantially all, of a file comprising the video production **1100** could be transferred before reproduction begins.

The video production communicating device **1800** generates an output operable with the reproducing apparatus **1300** from the video production **1100.** For example, if the video production **1100** were by DVD, the video production communicating device **1800** could be a conventional DVD player; if the video production **1100** were transferred over a computer network, the video production communicating device **1800** could be a programmed computer. In some embodiments the video production communicating device **1800** may be a broadcast station, either terrestrial or orbiting. One of skill in the art will recognize which structures, for example the DVD player or programmed computer, are suitable to operate with the video production **1100** depending on its form.

In an illustrative embodiment the video production **1100** is communicated to the reproducing apparatus **1300** with a broadcast network and the video production communicating device **1800** is conventional broadcasting hardware. In a more preferred embodiment the broadcast network is a television network; in a still more preferred embodiment, the video production is broadcast as a National Television Standards Committee ("NTSC") video signal; PAL, SECAM, or high-definition television formats could also be used.

Generally, the reproducing apparatus **1300** is capable of receiving the video production communicated by the video production communicating device **1800** and reproducing an video signal comprising the video production to, for example, a display **1200.** In addition, generally, the reproducing apparatus **1300** may operate as a client in client-server communications. Also, a selection device **1700** typically operates with the reproducing apparatus **1300** and allows a user (not shown) to select among selectable actions rendered on the display **1200**. As one of skill in the art will recognize, the particular form that the selection device **1700** takes may vary with the reproducing apparatus **1300**.

The reproducing apparatus **1300** communicates over a data network **1400**. The data network **1400** may be the same or a separate transmission medium as that though which the video production communicating device **1800** communicates the video production **1100** to the reproducing apparatus **1300**, including, for example, a computer network or broadcast. In the illustrative embodiment, the data network is the internet; preferably the hypertext transfer protocol (HTTP) is used. The data network **1400** may, more generally, include other forms of data communication.

Configured for communication with the reproducing apparatus **1300** via the data network **1400** is an action resource provider **1500**. The action resource provider **1500** provides action resource data to the reproducing apparatus **1300**. Action resource data, generally, may include instructions, such as HTML, XML, or SGML pages; scripts, programs, and analogous instructing informational languages which when parsed and rendered on suitable equipment provide for interaction. Typically action resource data includes a characterization of an interface. The interface results from suitable equipment parsing and rendering the characterization. In an illustrative embodiment, the action resource provider **1500** is an HTTP server. However, one skilled in the art will appreciate that the action resource provider **1500** could be other devices capable of communicating action resources with which the reproducing apparatus **1300** is configured to operate. In the illustrative embodiment the action resource provider **1500** communicates with a data storage **1600**. The data storage **1600** may store, for example, user profile data, product data, merchant data logs, or program guides.

Fig. 2 depicts a representation of a video production **1100**. Shown are a first placement zone **1110**, a second placement zone **1130,** and a Nth placement zone **1150** which correspond, respectively, to a first trigger zone **1120**, a second trigger zone **1140,** and a Nth trigger zone **1160**. The video production **1100** is not limited in the number of placement zones or trigger zones and N may be arbitrarily large or small. The trigger zones need not be precisely coincident with the placement zones.

In an illustrative embodiment, a placement zone comprises one or more frames of a video production, the one or more frames comprising an image referencing a product. The number of frames in the placement zone is not limited other than relative to the video production itself. As depicted in **Fig. 2**, the first placement zone **1110**, the second placement zone **1130**, and the Nth placement zone **1150** are disjoint. However, this is not fundamental to the invention and, for example, the first placement zone **1110** and the second placement zone **1130** could overlap. In the case of an overlap, plural products could be referenced by the image or images. One skilled in the art will further appreciate that a conventional video production may have one or more placement zones inherent in its layout while, also, placement zones may be added to a conventional video production using well-known editing techniques.

Within a trigger zone, for example, the first trigger zone **1120** are one or more triggers. In an illustrative embodiment, triggers are compliant with the CEMA EIA-746 standard or analogous standard. A trigger comprises a resource identifier. In the illustrative embodiment, the resource identifier is a Uniform Resource Identifier (URI) of the form:

$$\text{http://<server name>/<videoprod>/<position>} \tag{1}$$

The material denoted within angle-brackets < > are denote names of quantities used in accordance with an illustrative embodiment. In (1) above, <server name> may be any server addressable on the data network **1400,** including, for example, the action resource provider **1500,** conveniently, the server may be a dedicated server. <videoprod> refers to an identifier of the video production **1100** (or a segment thereof) into which a trigger is embedded. Conveniently, the <videoprod> is not temporally unique. i.e., the video production and embedded trigger may be distributed at arbitrary or multiple times. Triggers may also be indexical as described below in the section titled Indexical Content References. <position> refers to a position within the video production **1100,** exemplary positions may be the first trigger zone **1120** or the Nth trigger zone **1160**. In the illustrative embodiment, positions may be either temporally indexed or indexed by segments of the video production **1100**. More generally, a trigger resource identifier could identify other resources addressable in a client-server data communications network.

Conveniently, a trigger may be embedded in the Text-2 service of line 21 of the Vertical Blanking Interval of an analog television signal as specified in CEMA standard EIA-746 available from The Electronic Industries Association of Arlington, Virginia, U.S.A.. Conventional closed-captioning equipment may be used to embed triggers in accordance with the CEMA standard.

One aspect of the invention is the portion of the video production **1100** which is spanned by placement zones or trigger zones, Conventionally, many video productions are viewed primarily for entertainment purposes. It is undesirable for one or more images referencing one or more products to be the dominant images or dominant subject matter in a video production viewed for such purposes. In such a situation, a viewer of the video production may find non-dominant images of insufficient interest to retain viewership, possibly frustrating viewer expectations and forgoing the possibility of selection of selectable actions from an action selection interface made available through the video production.

In one embodiment of the invention the placement zones for a given product in a video production according to the invention are less than 50 % of the viewable time of the video production. Alternative embodiments may use, for example, less than 40%, 33%, 25%, 20%, 10%, or 5%. A placement zone may span a single segment in a video production. Shares of the total viewable time of the video production corresponding to one of a number of segments may thus also be used, including, for example (1/6) or about 15%. As one of skill in the art will appreciate having the benefit of this disclosure, a placement zone according to the invention will have some portion of the viewable time of the video production.

The video production **1100** operates with the reproducing apparatus **1300** which described in greater detail below with reference to **Fig. 3**. As noted above, the reproducing apparatus **1300** provides, at least, the functions of receiving and reproducing the video production and of a client in client-server communications. One of skill in the art will recognize numerous structures of programmed or programmable logic also capable of performing these and other functions in accordance with aspects of the invention. Exemplary structures could include, for example, a programmed general purpose computer with suitable video hardware, an integrated receiver/client appliance such as a set-top box, and special purpose computing machinery comprising an application specific integrated circuit (ASIC). Structures currently commercially available which provide at least the above-identified functions include, for example, a WEBTV Plus set-top box available from WebTV Networks, Inc. of Palo Alto, CA, U.S.A. It is contemplated, however, that the present invention will operate with other structures able to perform the above-identified functions (now known or later-developed). The remote control used with the WEBTV Plus set-top box is one example of a suitable form for the selection device **1700.** Many others will be recognized by those of skill in the art including, for example, pointing devices used with personal computers, other selection systems such as those based on speech recognition, and touch-screen systems.

One of skill in the art will recognize other features incorporated in set-top boxes with which aspects of the invention may operated. Other features may include, for example, a card reader (not shown). The card reader may read identification or financial information cards and the identification or financial information may be used with selectable actions according to the invention. The card reader may work with smart cards, and stored-value cards; in embodiments in which a selectable action includes transfer of value. The card reader may be used to read information from a card for payment of value.

Preferably, the reproducing apparatus **1300** communicates with the display **1200** and the data network **1400.** In operation, the video production communicating device **1800** communicates the video production **1100** to the reproducing apparatus **1300**. A trigger interpreter **1330 i**nterprets triggers in the-video production **1100** such as those in the second trigger zone **1140** or the Nth trigger zone **1160.** The trigger interpreter **1330** sends a request **1340** via the data network **1400.** The request **1340** is received by the action resource provider **1500.** The request **1340** may be handled as described in the section below entitled "Indexical Content References". If an action selection interface is available for the particular trigger, an ASI indication **1360** is communicated via the data network **1400** to the reproducing apparatus **1300.** A Response interpreter **1320** parses the ASI indication **1360** and communicates a visual indication of the ASI indication **1360** to a content integrator **1310**. The content integrator **1310** integrates the visual portions of the video production **1100** and visuals from the Response interpreter **1320**; the integrated visual may then be communicated to the display **1200.**

When an ASI characterization **1380** is available for a particular trigger, it is communicated via the data network **1400** to the Response interpreter **1320** in the reproducing apparatus **1300** as well. The Response interpreter **1320** parses the ASI characterization **1380** and renders a visual representation thereof which is communicated to the content integrator **1310** for communication to the display **1200**.

In an illustrative embodiment of the invention the indication of the availability of an ASI is one which is rendered as a visual image on the display **1200**. In other embodiments the indication of the availability of an ASI may be audio. In still other embodiments, it may not be communicated to the display **1200**. More, generally, the indication of the availability of an ASI may be a portion of the characterization of the ASI itself. In embodiments of the invention where the action resource provider **1500** is an HTTP server using the HTTP protocol, the indication of the availability of an ASI may be, for example, all, or a portion, of an HTTP Response Message sent after the action resource provider **1500** received and interpreted an HTTP Request Message.

The ASI characterization **1380**, generally, provides a characterization of an interface which may be parsed and rendered by the reproducing apparatus **1300** to provide one or more selectable actions. Preferably, the ASI characterization **1380** is also communicated using the HTTP protocol and the ASI characterization 1380 is preferably an HTML page which, typically, includes HTML extension tags for use with interactive television. One method of providing selectable actions is to provide links to action resources. However, the selectable actions may be implemented using other conventional client-side or client-server techniques. Action resources may be implemented using well-known programming methods. Conveniently, internet programming methods may be used and an action resource may be implemented with, for example, HTML pages, XML pages; CGI scripts or programs, servlets or other server-side scripts or programs; client-side scripts, applications or applets, or active controls; and other client-server methodologies. One of skill, having the desired functions of the action resource, will apprehend how it could be made or used with conventional programming methods.

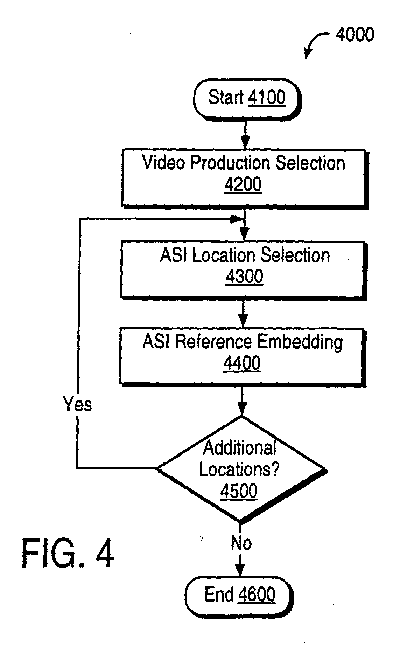

**Fig. 4** depicts a flow diagram of a 'reference embedding' method **4000** in accordance with the illustrative embodiment. From a 'start' terminal **4100** processing continues to a 'video production selection' procedure **4200**. The 'video production selection' procedure **4200** entails selecting a video production, such as the video production **1100**. Preferably, the video production **1100** already contains one or more images referencing one or more products, however, the additional step of embedding one or more images referencing one or more products may be performed using conventional video editing methods. Next an 'ASI location selection' procedure **4300** is entered in which locations, such as the second placement zone **1130** or the Nth placement zone **1150** are selected as locations in the video production **1100** where action selection interfaces are desired to be provided. Then, an 'ASI reference embedding' procedure **4400** commences in which a reference to an action selection interface is embedded in the video production **1100** at, for example, the second trigger zone **1140** or the Nth trigger zone **1160**. In an illustrative embodiment, the reference is a trigger such as that described above.

Process flow continues to an 'additional locations' decision procedure **4500**. If it is desired to select additional locations in the video production **1100** at which action selection interfaces could be made available, the 'additional locations' decision procedure **4500** exits through its 'yes' branch and process flow returns to the 'ASI location selection' procedure **4300** for another iteration. Otherwise, the 'additional locations' decision procedure **4500** exits through its 'no' branch and the 'reference embedding' method **4000** completes through an 'end' terminal **4600**.

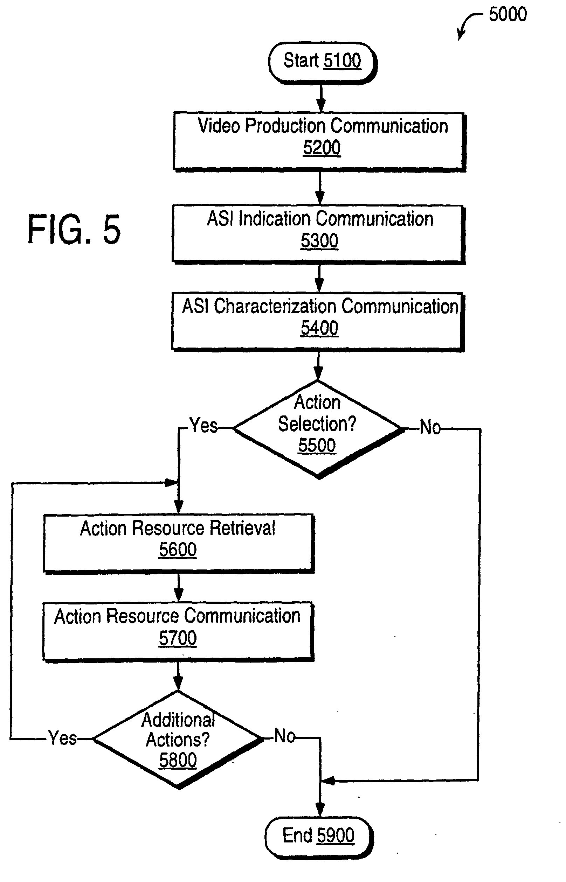

Shown in **Fig. 5** is a flow diagram of a 'viewer action session' method **5000** in accordance with an illustrative embodiment. Process flow initiates at a 'start' terminal **5100** and continues to a 'video production communication' procedure **5200**. The 'video production communication' procedure **5200** involves communication of a video production such as the video production **1100** from the video production communicating device **1800** to the reproducing apparatus **1300.** During reproduction of the first trigger zone **1120** when a trigger is encountered the request **1340** is sent and an 'ASI indication communication' procedure **5300** executed by which the ASI indication **1360** is communicated to the reproducing apparatus **1300.** Next, an 'ASI characterization communication' procedure **5400** communicates the ASI characterization **1380** to the reproducing apparatus **1300**. The ASI characterization **1380** is parsed, rendered, integrated with other visuals, and communicated to the reproducing apparatus **1300**. A user (not shown) may then select one or more selectable actions from the action selection interface as displayed on the display **1200**. An 'action selection' decision procedure **5500** exits through its 'yes' branch if the user selects one of the selectable action and process flow continues to an 'action resource retrieval' procedure **5600**. In the 'action resource retrieval' procedure **5600** an action resource is retrieved from the action resource provider **1500** and communicated to the reproducing apparatus **1300** via the data network **1400** in an 'action resource communication' procedure **5700**. The Response interpreter **1320** parses and renders visuals aspects of the action resource. Next, an 'additional actions' decision procedure **5800** exits through its 'yes' branch if the user selects additional actions and process flow returns to the 'action resource retrieval' procedure **5600**. If no action was selected in the 'action selection' decision procedure **5500** or if an additional action is not selected in the 'additional actions' decision procedure **5800** process flow completes through an 'end' terminal **5900.**

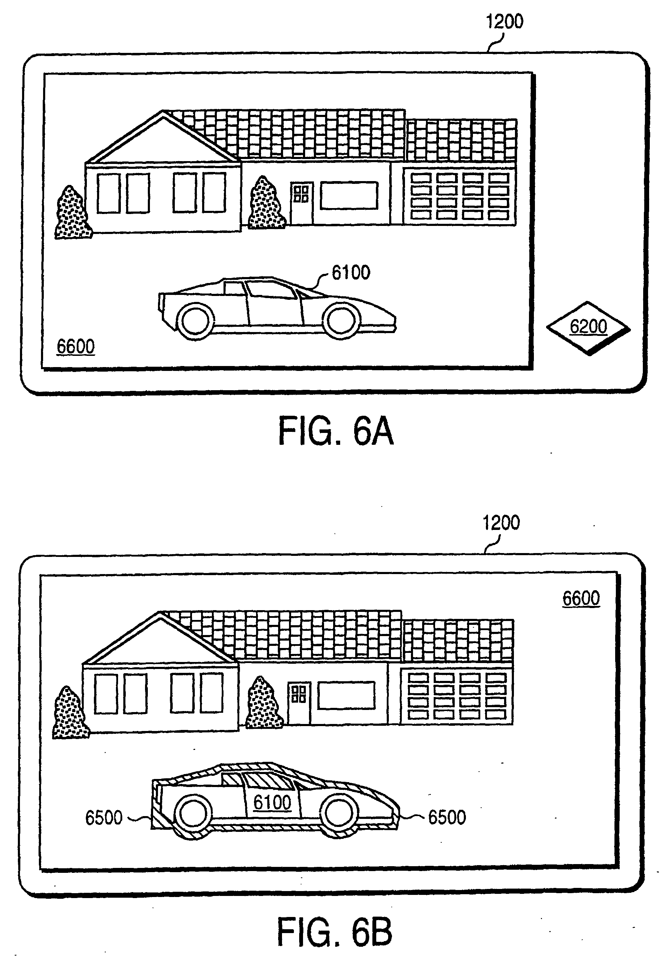

A viewer's perspective of the display **1200** will now be provided to further illustrate aspects of the illustrative embodiment. Shown in **Fig. 6A** are the display **1200** and an image referencing a product **6100**. As noted above, the image referencing a product **6100** may refer either directly or indirectly to the product. Thus, for example, if the image referencing a product **6100** were an image of a car, the referenced product could be the car or, for example, car insurance services, car quality certification, or a car vending collective.

Also shown in **Fig. 6A** is a visual indication of the availability of an AS1 **6200**. As noted above, the indication of the availability of an ASI may be rendered as a visual image on the display **1200** while in other embodiments the indication of the availability of an ASI may be in other forms. In accordance with the illustrative embodiment the visual indication of the availability of an ASI **6200** could be provided with an HTML page with television extension tags which render the video production **6600** in one portion of the display **1200**, and the visual indication of the availability of an ASI **6200** in another.

An alternative manner of providing the visual indication of the availability of an ASI **6200** is depicted in **Fig. 6B** where a visual highlight **6500** of the image referencing a product **6100** is shown. The visual highlight **6500** may be an image edited to highlight the image referencing a product **6100** which may be tracked through multiple frames of the video production **6600**. Conveniently the visual highlight **6500** may be implemented with an HTML table. The height and width of the table and its cells are suitably selected for the size of the visual highlight **6500** of the image referencing a product **6100.** An image providing the visual highlight **6500** is located in one cell of the table. In some embodiments, the height and width of the cell are adjusted to locate the upper left comer of the visual highlight **6500** image. As the image referencing a product **6100** moves during the video production, the upper left corner of the visual highlight **6500** may be made to track the image referencing a product **6100** by adjusting the height and width of the cell in which the visual highlight **6500** is located. Accordingly, an additional aspect of some embodiments of the invention is a method for tracking an image in a video production with an overlay image.

In some embodiments of the invention the action resource provider **1500** detects if the reproducing apparatus **1300** is able to support a type of selectable action in an action selection interface from information in the request **1340** for example, a user-agent header field. In some of these embodiments the visual highlight **6500** is communicated to the reproducing apparatus **1300** only if the reproducing apparatus **1300** supports the selectable action in the action selection interface.

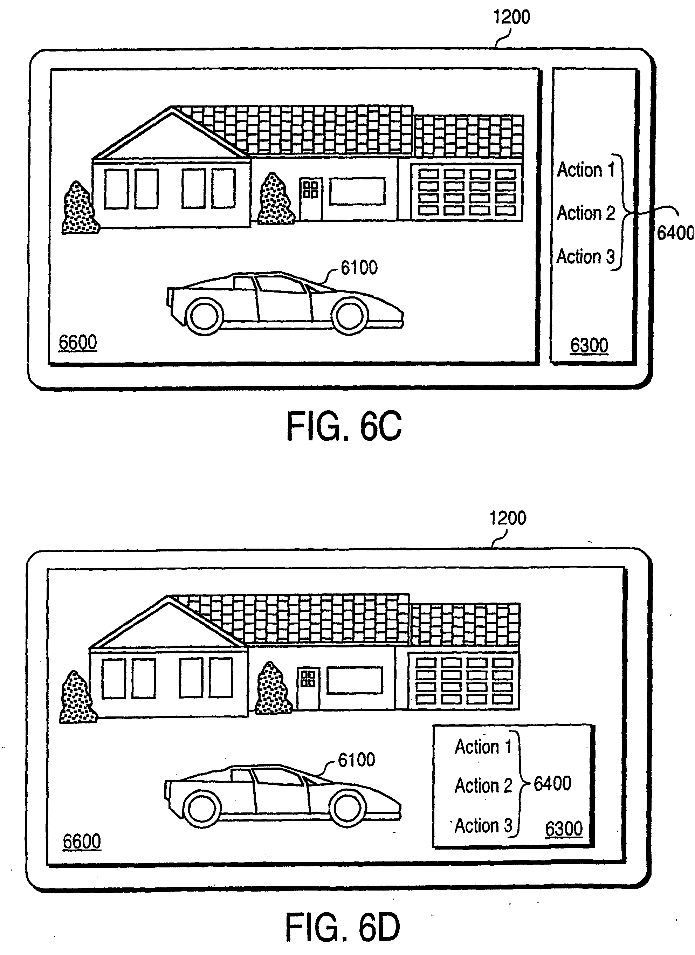

Shown in **Fig. 6C** and **Fig. 6D** are the display **1200**, the image referencing a product 6100 and a rendered characterization of an action selection interface **6300**. While the rendered characterization of an action selection interface **6300** is generically depicted, one of ordinary skill in the art will appreciate that it may be as complex as can be parsed and rendered by the reproducing apparatus **1300**. As depicted, the rendered characterization of an action selection interface **6300** comprises the plurality of selectable actions **6400** which may be selected by a user with, for example, the selection device **1700**. As shown in **Fig. 6C** the rendered characterization of an action selection interface **6300** appears in a portion of the display **1200** separate from the video production **6600**. However, as depicted in **Fig. 6D**, the rendered characterization of an action selection interface **6300** may appear in the same portion of the display **1200** as the video production **6600**. One skilled in the art will quickly appreciate that the views in **Fig. 6A, Fig. 6B, Fig. 6C,** and **Fig. 6D** are illustrative and not limiting, rather one of skill will be able to make and use other configurations of the elements in the aforementioned figures.

The selectable actions in the plurality of selectable actions **6400** may be any action susceptible to implementation in the action resource provider **1500** and the reproducing apparatus **1300.**

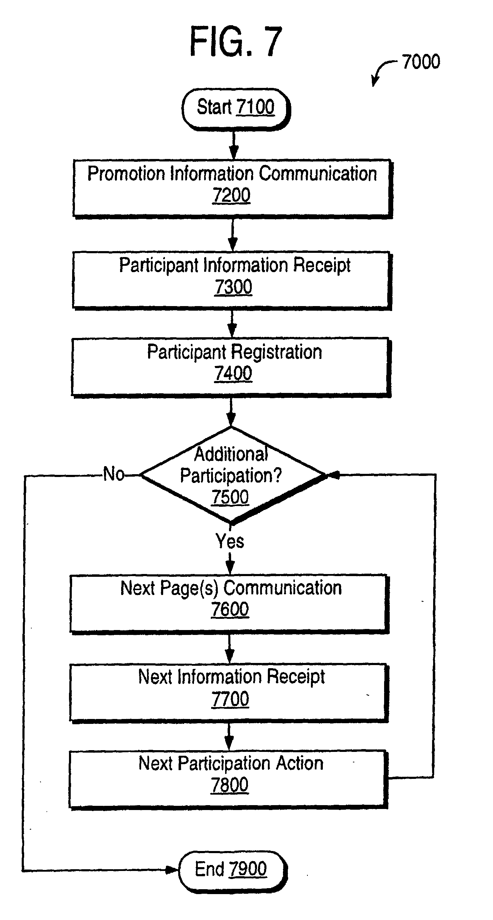

To further illustrate aspects of the invention, **Fig. 7, Fig. 8,** and **Fig. 9** depict methods for implementing exemplary selectable actions. One of skill in the art will quickly appreciate that these are illustrative and not limiting of the scope of the invention. Rather, one skilled in the art will recognize numerous other selectable actions operable with the invention.

One selectable action is a promotion participation action. Conveniently the promotion participation action is a link to action resources which implements the promotion participation action. Further illustrative detail may be found in **Fig. 7** where a promotion participation action method **7000** is depicted. Functions described in the promotion participation action method **7000** may be implemented with, for example, HTML pages, XML pages; CGI scripts or programs, servlets or other server-side scripts or programs; client-side scripts, applications or applets, or active controls; and other client-server methodologies. Processing initiates at a 'start' terminal **7100** and continues to a 'promotion information communication' procedure **7200** which communicates information about the promotion participation action to the reproducing apparatus **1300.** Next, a 'participant information receipt' procedure **7300** stores information communicated by a user of the reproducing apparatus **1300** relevant to participation in the promotion and processing continues to a 'participant registration' procedure **7400**. The 'participant registration' procedure **7400** completes the basic information exchange for a promotion participation which may involve data interchange with other servers (not shown), for example those operated by the promoting entity or affiliate. An 'additional participation' decision procedure **7500** allows a participant to select participation in additional aspects of the promotion. Additional participation options may be communicated to the reproducing apparatus **1300** which a user views on the display **1200**.

If the user does not wish to engage in additional aspects of the promotion, the 'additional participation' decision procedure **7500** exits through its 'no' branch and processing completes through an 'end' terminal **7900.** Otherwise, the 'additional participation' decision procedure **7500** exits through its 'yes' branch and a 'next page(s) communication' procedure **7600** communicates one or more pages to the reproducing apparatus **1300** for the participant. A 'next information receipt' procedure **7700** receives additional information as necessary or desired from the participant and processing continues to a 'next participation action' procedure **7800** which performs one or more additional participation actions. These may include, for example, information exchange or storage with a promoting entity or affiliate. It may be desirable for additional participation options to be offered, and processing returns to the 'additional participation' decision procedure **7500** through which such additional participation may begin.

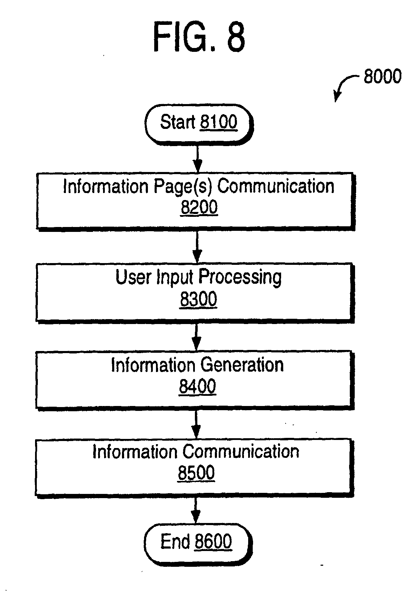

Another selectable action is a information request action. Conveniently the information request action is a link to action resources which implements the information request action. Further illustrative detail of an may be found in **Fig. 8** where an information request action method **8000** is depicted. Functions described in the information request action method **8000** may be implemented, for example, with HTML pages, XML pages; CGI scripts or programs, servlets or other server-side scripts or programs; client-side scripts, applications or applets, or active controls; and other client-server methodologies. Processing for the information request action method **8000** initiates at a 'start' terminal **8100** and continues to a 'information page(s) communication' procedure **8200** in which one or more pages are communicated to the reproducing apparatus **1300** for communication to the display **1200.** Commonly, plural informational options are presented to a user. A 'user input processing' procedure **8300** receives indication of user selections from the reproducing apparatus **1300** and performs any transformations convenient in extracting or reporting aspects of the user selections. In addition, the 'user input processing' procedure **8300** may also log, for example, user data or information request data. Then an 'information generation' procedure **8400** generates information output for reporting to the user. The 'information generation' procedure **8400** may employ any of many known report generation or extraction methods to produce the requested information for presentation to the user. An 'information communication' procedure **8500** then communicates requested information to the user. The requested information may be communicated to the user via the reproducing apparatus **1300** and the display **1200** or be communicated through other methods including, for example, by post or facsimile. The information request action method **8000** completes through an 'end' terminal **8600.**

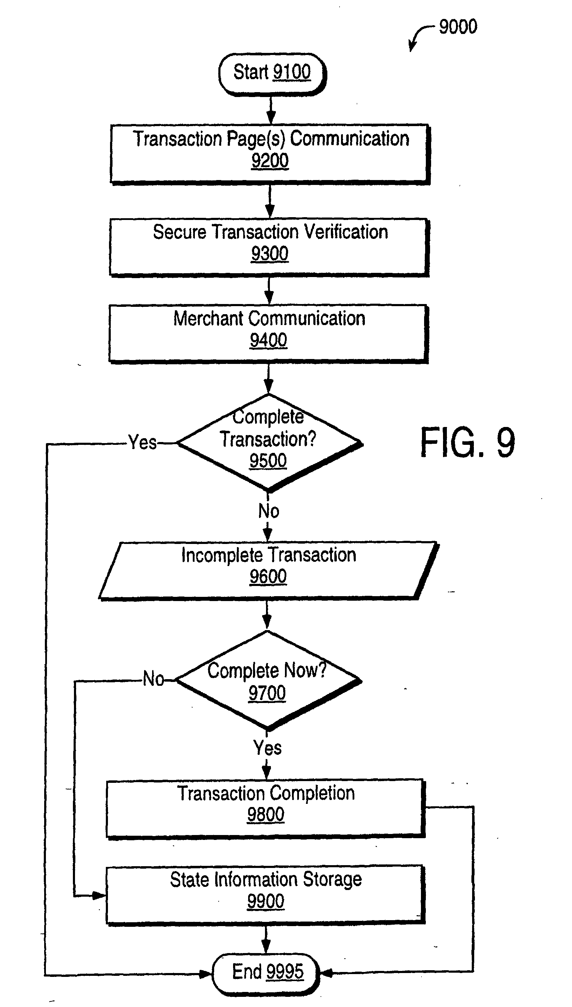

Another selectable action is a product purchase action. Conveniently the product purchase action is a link to action resources which implements the product purchase action. Further illustrative detail of an may be found in **Fig. 9** where a product purchase action method **9000** is depicted. Functions described in the product purchase action method **9000** may be implemented, for example, with HTML pages, XML pages; CGI scripts or programs, servlets or other server-side scripts or programs; client-side scripts, applications or applets, or active controls; and other client-server methodologies. One of skill having the benefit of this disclosure will appreciate that many known and commercially available electronic commerce systems may be used to perform aspects of the product purchase action method **9000**. Processing in the product purchase action method **9000 i**nitiates at a 'start' terminal **9100** and continues to a 'transaction page(s) communication' procedure **9200** in which pages used to present the product purchase transaction are communicated to the reproducing apparatus **1300** for rendering on the display **1200.** Upon user input of transaction information a 'secure transaction verification' procedure **9300** verifies transaction information with a transaction security verification mechanism. One of skill in the art will recognize many transaction security verification mechanisms. Conveniently, a predetermined identification number personal to the user may be used.

Next, a 'merchant communication' procedure **9400** communicates transaction information from the user and product information to a merchant. The merchant may or may not have received sufficient information to complete the transaction depending on the particular requirements of the merchant or transaction. A 'complete transaction' decision procedure **9500** exits through it s 'yes' branch if the 'merchant communication' procedure **9400** returns an indication that the transaction was completed. This is communicated to the user and processing completes through an 'end' terminal **9995**.

If the transaction could not be completed, the 'complete transaction' decision procedure **9500** exits through its 'no' branch and an 'incomplete transaction' output block **9600** reports to the user that the transaction could not be completed at the current time on the basis of the information thus far received. A 'complete now' decision procedure **9700** prompts the user if they wish to complete the transaction now. If so, the 'complete now' decision procedure **9700** exits through its 'yes' branch and a transaction completion' procedure **9800** completes the rest of the transaction. Processing then completes through the 'end' terminal **9995.**

If the user does not wish to complete the transaction at the current time, the 'complete now' decision procedure **9700** exits through its 'no' branch and a 'state information storage' procedure **9900** stores information about the current state of the transaction for later completion by the user. Processing completes through the 'end' terminal **9995**.

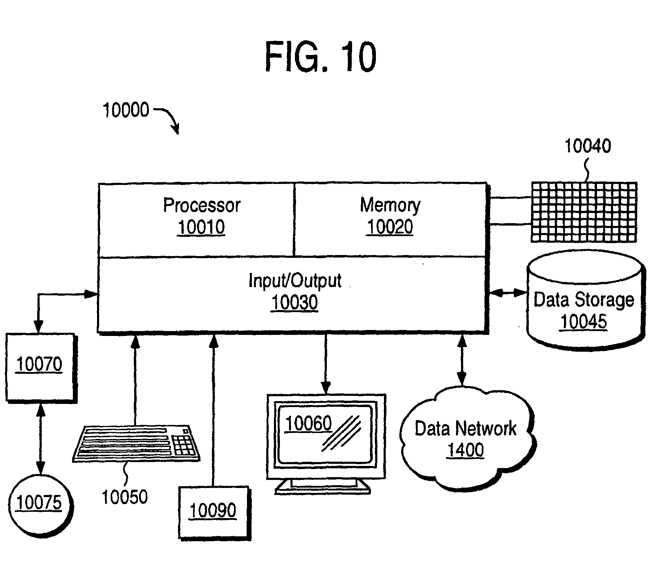

Methods according to the invention may be computer implemented either in whole or in part. **Fig. 10** depicts a computer system **10000** capable of embodying aspects of the invention. The action resource provider **1500** may be structures in accordance with the computer system **10000.** The computer system **10000** comprises a microprocessor **10010**, a memory **10020** and an input/output system **10030**. The memory **10020** is capable of being configured to provide a data structure **10040** which may contain data manipulated by the computer system 10000 when embodying aspects of the invention. Further illustrated is a media drive **10070**, such as a disk drive, CD-ROM drive, or the like. The media drive **10070** may operate with a computer-usable storage medium **10075** capable of storing computer-readable program code able to configure the computer system **10000** to embody aspects of the invention. The input/output system **10030** may also operate with a keyboard **10050**, a display **10060**, a pointing device **10090**, a data storage **10045,** or a network such as the data network **1400.** As illustrated, the computer system **10000** is general-purpose computing machinery. As one of skill recognizes programmed instructions may configure general purpose computing machinery to embody structures capable of performing functions in accordance with aspects of the invention. Special purpose computing machinery including, for example, an application specific integrated circuit (ASIC) may also be used. One skilled in the art will recognize numerous structures of programmed or programmable logic capable of being configured to embody aspects of the invention. In some embodiments, the computer system 10000 is a SPARC-based workstation from Sun Microsystems of Mountain View, CA, running the SOLARIS operating system and the Apache HTTP server with a Secure Sockets Layer module.

In illustrative embodiments of the invention, computer program code configures a computer to embody aspects of the invention. So configured, representations of physical quantities and characteristics are manipulated through a series of operations to achieve aspects of a method, apparatus, and system for providing action selections to an image referencing a product in a video production. One skilled in the art will appreciate the distinction between the manipulation of physical quantities and representations thereof within a computer and will quickly apprehend when reference is being made to one or the other.

In some illustrative embodiments, the action resource provider 1500 is a computer system similar to the computer system 10000 and runs an HTTP server. However, one skilled in the art will appreciate that the action resource provider 1500 could be other devices with which the reproducing apparatus 1300 is configured to operate. In the illustrative embodiment the action resource provider 1500 communicates with a data storage 1600. The data storage 1600 may store, for example, user profile data, product data, merchant data logs, or program guides.

User profile data may contain information useful to customizing content and following through on information request, promotion participation, product purchase actions, and other selectable actions. This includes both information explicitly supplied by the user or taken from service registration data, and information derived from the user's pattern of usage. In an illustrative embodiment, explicit data includes name, address, phone number, birthdate, preferred payment methods, billing address, income, and sex. Usage data may include shows watched, the frequency of performing the different interactive actions, show loyalties, and Web sites visited. A preferred mode of using the user profile data to customize content will conveniently involve first deriving intermediate data. For example, it is simpler to derive an age, or an age group, rather than directly customizing from birthdate. Thus the user profile may include the results of calculations and aggregations of data values to create a smaller and therefore more manageable space of content variations.

## *INDEXICAL CONTENT REFERENCES*

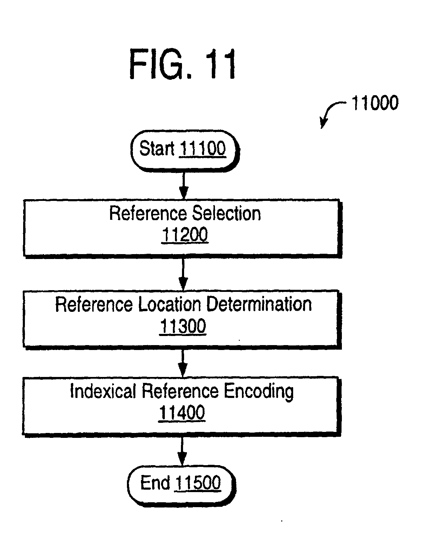

An additional aspect of the invention involves a video production comprising indexical content references. Indexical content references may be beneficially used in conjunction with the zoned system described above. **Fig. 11** depicts a flow diagram of a method for creating a video production including indexical content references **11000** in accordance with an illustrative embodiment. A video production including an indexical content reference, when reproduced on compatible equipment such as the reproducing apparatus **1300** (described above) engages the equipment initiate a request to a resource identifier included in the indexical content reference wherein a server addressable via a data network generates a current content reference. Another request is sent to the current content reference and responsive thereto, a response is communicated to the compatible equipment, e.g., the reproducing apparatus **1300**.

Process flow initiates at a 'start' terminal **11100** and continues to an 'indexical reference selection' procedure **11200**. The 'indexical reference selection' procedure **11200** comprises selection of an indexical reference to be encoded in the video production. Selection may be by a human operator or may be automated. Next, processing continues to a 'reference location determination' procedure **11300** that comprises determining the location within the video production where the indexical reference selected by the 'indexical reference selection' procedure **11200** can be encoded. The 'reference location determination' procedure **11300** may also be performed by a human operator or may be automated. One of skill in the art will recognize many schemes for determining the location within the video production where the indexical reference may be encoded including, for example, time or position-based schemes, and content-based schemes. Additionally, a zone-based scheme may be used, as described above.

Process flow continues to an 'indexical reference encoding' procedure **11400** that comprises encoding the indexical reference selected by the 'indexical reference selection' procedure **11200** at the location in the video production determined by the 'reference location determination' procedure **11300**. The video production may be in many conventional forms and conventional video editing equipment known to those skilled in the art may be used to encode the indexical reference. Conveniently, the indexical reference may be encoded in the vertical blanking interval ("VBI") of a conventional analog television broadcast using conventional closed-captioning systems. The Text-2 service of line 21 of the VBI may be used in accordance with CEMA standard EIA-1746 (available from the Electronic Industries Association ("EIA") of Arlington, VA, U.S.A.). When the video production is in other forms including, for example, digital broadcast or narrowcast video, HDTV, encoded on a tangible medium, or a file for use with a video application, encoding schemes suitable to the form should be used and one of skill in the art will recognize how to encode an indexical reference in accordance with the invention in many conventional forms of distributing the video production. Process flow completes through an 'end' terminal **11500**.

A video production created according to the method for creating a video production including indexical content references **11000** may be used with other aspects of the invention including, for example, those depicted in **Fig. 1**.

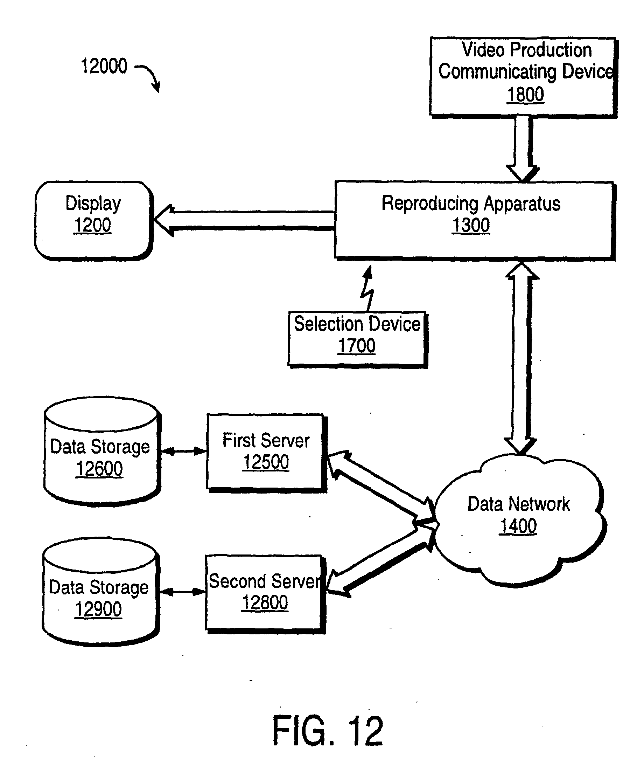

**Fig. 12** depicts a block diagram of the elements in an operating environment of a system **12000** in accordance with an illustrative embodiment. Corresponding components in **Fig. 12** are similar to those described above in connection with **Fig. 1** and reference should be made to the portion of the description above

In **Fig. 12**, able to communicate with the reproducing apparatus **1300** via the data network **1400** is a first server **12500** and a second server **12800**, which may communicate, respectively, with a first data storage **12600** and a second data storage **12900**. Generally there need not be functional differences between the first server **12500** and the second server **12800** and accordingly subsequent discussion will be made with reference to the first server **12500** except where additional clarity may be had by reference to the second server **12800**. Further, as one of skill will appreciate, not ail embodiments require more than one server, and other embodiments may operate with more than two servers. Additional description of illustrative structures that may implement functions of the first server **12500** is provided in connection with **Fig. 10** above.

In an illustrative embodiment, the first server **12500** is an HTTP server. However, one skilled in the art will appreciate that the first server **12500** could be other devices with which the reproducing apparatus **1300** is configured to operate. In illustrative embodiments the first server **12500** communicates with a first data storage **12600**. The first data storage **12600** may store, for example, user profile data, product data, merchant data logs, or program guides, data objects comprising parameters or parameter values, and data objects comprising data operable with programmed instructions for mapping a first request to a second request.

Referring to **Fig. 3**, n operational mode, the video production communicating device **18000** communicates the video production to the reproducing apparatus 1300. A trigger interpreter **1330** interprets triggers in the video production and extracts a resource identifier. The trigger interpreter **1330** sends a request **1340** comprising the resource identifier via the data network **12400**.

A server **12380** receives the request **1340**. The server **12380** may be the first server **12500**, the second server **12800**, or another device addressable via the data network **12400**. The reproducing apparatus **1300** receives a response **1360** via the data network **12400** and a response interpreter **1320** parses and renders the response **1360**. Rendered visual aspects of the response **1360** are sent to a content integrator **1310** which integrates visual aspects of the response **1360** with visual aspects of the video production for communication to the display **12200**.

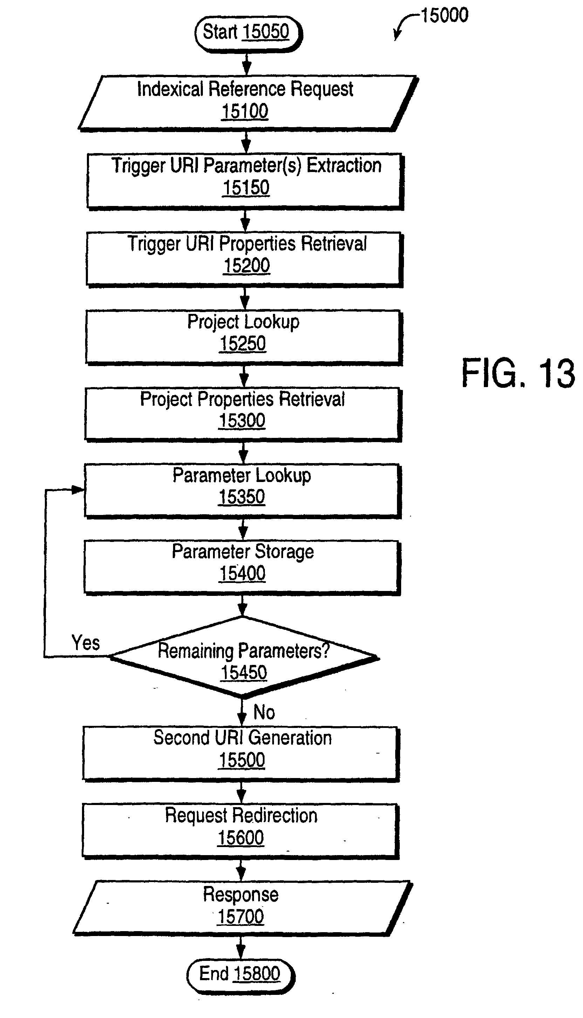

**Fig. 13** depicts an 'indexical trigger' method **15000** in accordance with an illustrative embodiment. Process flow according to the 'indexical trigger' method **15000** preferably occurs according to programmed instructions executing on networked computing machinery, for example, the first server **12500**. The 'indexical trigger' method **15000** may be implemented with one or more server-side scripts or programs including, for example, JAVA servlets or CGI scripts or programs.

Process flow initiates at a 'start' terminal **15050** and continues to an 'indexical reference request' input block **15100**. The 'indexical reference request' input block **15100** comprises a request to an addressable network resource such as the request **1340**. The request may be compliant with the HTTP protocol in its various versions including, for example, 1.0, draft 1.1, and draft HTTP-NG. It is contemplated that the present invention could also operate with later-developed versions of the HTTP protocol or its successors.

Typically, the request contains, at least, a resource identifier, one or more header field-value pairs which may specify, for example, functional parameters to be used in a client-server session initiated by the request, and a terminator. The resource identifier in the request of the 'indexical reference request' input block **15100** is typically extracted from a trigger. When the request is HTTP compliant, the resource identifier commonly is an uniform resource identifier ("URI") and the one or more header field-value pairs are as specified in the HTTP protocol standard(s).

In some illustrative embodiments, triggers are compliant with CEMA standard EIA-1746 available from The Electronic Industries Association of Arlington Virginia, U.S.A. In these embodiments, the resource identifier in the trigger is an uniform resource identifier and the uniform resource identifier in the trigger is of the form:

$$\text{http://<server name>/<videoprod>/<position>} \tag{1}$$

The material denoted with angle-brackets <>are quantities used in accordance with the illustrative embodiment. In (1) above, <server name> may be any server addressable on the data network **1400**, including, for example, the first server **12500**, conveniently, the server may be a dedicated server; <videoprod> refers to an identifier of the video production or a segment thereof into which the trigger is embedded; <position> refers to a position within the video production. Thus, one particular uniform resource identifier according to (1) could be:

$$\text{http://t.b3tv.com/video7/05} \tag{1a}$$

One of skill in the art having the benefit of this disclosure will appreciate that the present invention is not limited to triggers comprising uniform resource identifiers, and trigger uniform resource identifiers are not limited to the form illustrated in (1) above. One aspect of the present invention is that the resource identifier in the trigger is what is termed herein "indexical".

"Indexical" triggers may refer to triggers that comprise a resource identifier including a path to be used by a server in-locating an associated resource that is independent (or substantially independent) of the content addressable by the resource identifier. One of skill in the art will appreciate that indexical triggers comprise resource identifiers that are distinct from the conventional resource identifier used, for example, in connection with World Wide Web sites, where a path specified to be used by a server in locating an associated resource is dependent (or substantially dependent) on the content of resource addressable by the resource identifier. Indeed, is common practice in connection with World Wide Web sites to specify an uniform resource identifier with a path that precisely specifies a path in a file system where content (for example an HTML page or image) is stored.

One manner in which indexical resource identifiers may be made independent (or substantially independent) from the content addressable by the resource identifier is for the path of the resource identifier to indicate the medium in which the resource identifier is embedded, for example, the path may indicate that the resource identifier is embedded in a video broadcast.

Yet another manner in which indexical resource identifiers may be made independent (or substantially independent) from the content addressable by the resource identifier is for the path of the resource identifier to indicate the broadcast context in which the resource identifier is embedded. For example, the path may indicate a name of a video production and a position in the video production.

One, non-limiting, example of the use indexical trigger resource identifiers is for the <videoprod> to be an identifier of the video production in which the resource identifier is embedded and <position> to refer to an indexed position within the video production. Other examples included, one or more strings which provide only video production information or both video production and position information. Such one or more strings may themselves be easily recognizable as conveying their included information or may be the product of a hash function, transform, and/or other modification which requires data processing to render their information easily recognizable. An additional example of an indexical reference could be as a key for use with a data structure storing key-value pairs on a server. One skilled in the art having the benefit of the teachings herein will quickly appreciate many modifications, variations, and adaptations of indexical triggers as herein described which, while departing from the illustrative examples, remain within the scope of the present invention as set forth in the appended claims.

An indexical trigger allows enhancing content customization through use of parameterized resource identifiers without consuming limited bandwidth in a video production by providing a generally compact resource identifier which is mapped to a parameterized resource identifier by a server, such as the first server **12500**. The server may then redirect the parameterized resource identifier and a response can be communicated to the reproducing apparatus which uses the paramterized resource as a BASE element for further interaction. Further, an indexical trigger allows for time-appropriate enhancing content to be provided in connection with enhanced video production. A resource identifier in the indexical trigger need not address particular enhancing resources. A server such as the first server **12500**, may contain easily-updatable data comprising time-appropriate enhancing resources. The server may redirect the resource identifier from the indexical trigger to one or more pages providing time-appropriate enhancing resources. Further, an indexical resource identifier allows for opporuntistic provision of enhancing content. An indexical trigger comprising a resource identifier dedicated to opportunistic enhancing content may be embedded in a video production. When it is determined to provide opportunistic enhancing content, it may be done at the server. Still further, indexical triggers may be used to facilitate internationalization of enhancing content. The resource identifier in the trigger, itself, may be neutral with respect to national or linguistic group. However, a server, the first server **12500** may gain information from header fields and associate expressions in the request-about language or location information associated with a viewer or the reproducing apparatus. These may be used by the server to determine an appropriate language in which to respond. A network identifier associated with the reproducing apparatus, e.g. an IP address, may also be used to identify the country of origin of the requesting hardware and this too, may be used for suitable internationalization with indexical triggers.

Processing of the 'indexical trigger' method **15000** continues to an 'trigger URI parameter extraction' procedure **15150**. The 'trigger URI parameter extraction' procedure **15150** examines the uniform resource identifier in the request **1340** for the values associated with the <videoprod> or <videoprod> and <position> quantities and extracts this information. Next, a 'trigger URI properties retrieval' procedure **15200** retrieves a first data object comprising first key-value pairs stored in data storage accessible by the server implementing the 'indexical trigger' method **15000.** Using the quantities extracted from the <videoprod> or <videoprod> and <position> portions of the uniform resource identifier as a key, a 'project lookup' procedure **15250** looks for a value in the first data object associated with the key-- herein termed a "project"--and a 'project properties retrieval' procedure **15300** retrieves and stores a second data object comprising second key-value pairs stored in data storage accessible by the server implementing the 'indexical trigger' method **15000.**

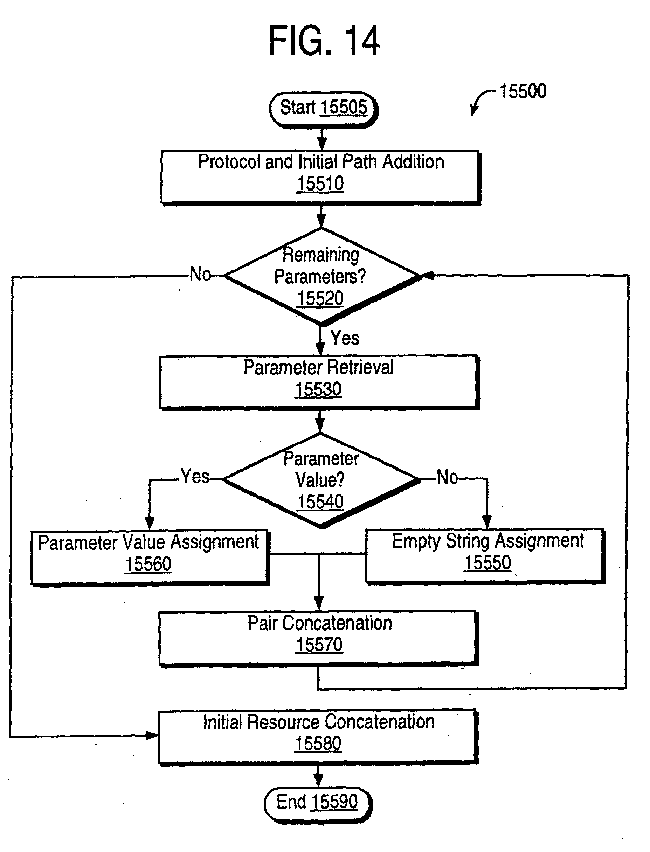

Next, a 'parameter lookup' procedure **15350** uses a string associated with the parameters as a key with the second key-value pairs to lookup parameters associated with the project. A 'parameter storage' procedure **15400** stores a first parameter in a data structure. Conveniently, the data structure facilitates sorted retrieval, for example, a binary search tree. A 'remaining parameters' decision procedure **15450** exits through its "yes" branch if additional parameters remain and process flow returns to the 'parameter lookup' procedure **15350** for another iteration of parameter lookup and storage. When no more parameters remain, the 'remaining parameters' decision procedure **15450** exits through its 'no' branch and processing continues to a 'second URI generation' procedure **15500**. The 'second URI generation' procedure **15500** will be described in greater detail with reference to **Fig. 14** below. Briefly, here, the 'second URI generation' procedure **15500** generates an uniform resource identifier comprising parameter-parameter value pairs.

Processing continues to a 'request redirection' procedure **15600** that receives the uniform resource identifier generated by the 'second URI generation' procedure **15500** and redirects the request received in the 'indexical reference request' input block **15100** to the second uniform resource identifier generated by the 'second URI generation' procedure **15500**. In some embodiments of the invention the redirection is internal, that is, the redirected request is communicated directly to the server performing the 'indexical trigger' method **15000.** In other embodiments, the redirection is external.

Some embodiments employing external redirection communicate a redirect message to the reproducing apparatus **1300** comprising the uniform resource identifier generated by the 'second URI generation' procedure **15500**. Typically in these embodiments the reproducing apparatus **1300** then sends a redirected request to the second uniform resource identifier.

Other embodiments employing external redirection communicate the redirect message to a separate server. Such an embodiment can be further illustrated with reference to **Fig. 12**. Initially, the reproducing apparatus **1300** communicates the request received in the 'indexical reference request' input block **15100** via the data network **1400** to, for example, the first server **12500**. Then, the first server **12500** performs steps of the 'indexical trigger' method **15000** and communicates the redirect message to the second server **12800** via the data network **1400**. The second server **12800** may then perform additional processing responsive to the redirect message including, for example, steps of the 'indexical trigger' method **15000**.

Whether external, internal, or other type of redirection is used in the 'request redirection' procedure **15600**, processing continues to a 'response' output block **15700** that comprises a response sent to the reproducing apparatus **1300.** The response may be, for example, an HTTP-compliant response message, although other data transfer protocols may be also be used. Processing completes through an 'end' terminal **15800**.

Further detail of the 'second URI generation' procedure **15500** will now be provided with reference to **Fig. 14.** Process flow initiates at a 'start' terminal **15505** and continues to a 'protocol and initial path addition' procedure **15510**. As noted above, in accordance with an illustrative embodiment, the resource identifier generated by the 'second URI generation' procedure **15500** is an uniform resource identifier. As one of skill in the art recognizes, uniform resource identifiers conventionally begin with a designation of a protocol or scheme to use in attempting retrieval of the identified resource which is followed by one or more elements of a path; accordingly, the 'protocol and initial path addition' procedure **15510** begins formation of the uniform resource identifier by adding these elements.

Process flow continues to a 'remaining parameters' decision procedure **15520** which determines if parameters remain for addition to the uniform resource identifier and thus controls exit from an iterative block comprising elements described below. Typically during a first iteration of the 'remaining parameters' decision procedure **15520** exits through its 'yes' branch and process flow continues to a 'parameter retrieval' procedure **15530** that retrieves a parameter from the data structure used with the 'parameter storage' procedure **15400**. Next, a 'parameter value' decision procedure **15540** determines if a parameter value associated with that parameter is available. If so, the 'parameter value' decision procedure **15540** exits through its 'yes' branch and a 'parameter value assignment' procedure **15560** assigns a variable the parameter value; if not, the 'parameter value' decision procedure **15540** exits through its 'no' branch and an 'empty string assignment' procedure **15550** assigns the variable the value of the empty string.

Next, a 'pair concatenation' procedure **15570** concatenates the parameter-parameter value pair to the uniform resource identifier. In this step, the parameter and parameter value are separated by an equals sign ("="). Additionally, the 'parameter value assignment' procedure **15560** concatenates a "/" to divide parameter-parameter value-pairs. Process flow returns to the 'remaining parameters' decision procedure **15520** to begin another iteration. When sufficient iterations have occurred to retrieve all parameters, the 'remaining parameters' decision procedure **15520** exits through its 'no' branch and process flow continues to an 'initial resource concatenation' procedure **15580**.

Frequently it is desirable for an initial resource comprising references to other resources to be first presented to a user. The 'initial resource concatenation' procedure **15580** facilitates this by concatenating a designator of the initial resource to the path. Process flow completes through an 'end' terminal **15590**

To further aid in understanding the 'second URI generation' procedure **15500,** a non-limiting illustration of an uniform resource identifier which could be created in accordance with an illustrative embodiment of the invention is shown by (2) below.

    http://<server name>/p/<project>/<name 1>=<value 1 >/<name2>=<value2>/<name3>=/start.html          (2)

As shown in (2) quantities exemplifying particular aspects of the content URI are shown with angle-brackets <>. In (2), "http://<server name>/p/<project>" illustrates subject matter that could be added by the 'protocol and initial path addition' procedure **15510.** Parameters are illustrated by <name1>, <name2>, and <name3>; parameter values are illustrated by <value1>, <value2>, and an empty string following the equals sign which follows <name3>. An initial resource designator is illustrated by "start.html" as could be added by the 'initial resource concatenation' procedure **15580.** As one skilled in the art having the benefit of this disclosure will appreciate, the present invention is not limited to URIs of the length, arrangement, or form (abstractly or concretely) of the exemplary content URI in (2); nor is the present invention limited to URIs generally, rather (2) illustrates an example of a resource identifier in the form of a URI which could be created by one embodiment among many possible embodiments of the invention which lie within the scope of the invention as set forth in the appended claims.

Parameters and parameter values may be obtained from header fields and associated expressions in the request received in the 'indexical reference request' input block **15100.** Exemplary header fields used with versions of the HTTP protocol are shown in table 1 below:

Table 1.

| | |
|---|---|
| Accept | Range |
| Accept-Charset | Referer |
| Accept-Encoding | TE |
| Accept-Language | User-Agent |
| Authorization | Content-Encoding |
| Expect | Content-Language |
| From | Content-Length |
| Host | Content-Location |
| If-Match | Content-MD5 |
| If-Modified-Since | Content-Range |
| If-None-Match | Content-Base |
| If-Range | Content-Style-Type |
| If-Unmodified-Since | Content-Type |
| Max-Forwards | Date: |
| Proxy-Authorization | Expires |
| Last-Modified | Extension-header |

In preferred embodiments of the invention, use of header fields and header field values is in compliance with the HTTP protocol available from the World Wide Web Consortium (W3C), Massachusetts Institute of Technology, Laboratory for Computer Science, Cambridge, Massachusetts, U.S.A.

Parameters may also include information obtained from an network address associated with the reproducing apparatus **1300** including, for example, an IP address. In certain circumstances it could be possible to use this information to determine an approximate geographic location for the reproducing apparatus **1300** which may be correlated to time zones or other geographic information. Geographic or Date field information could be used infer a time zone for the reproducing apparatus **1300** initiating the request. Time zone information could then be used in conjunction with an Electronic Program Guide ("EPG") to gather additional information regarding the video production being viewed by a viewer. Some embodiments of the invention may use parameters based on an EPG alone for creating a response responsive to the broadcast context in which a request was initiated.

Conveniently, parameter-parameter value pairs are added to the content URI by the 'second URI generation' procedure **15500** in alphanumeric order by use of a data structure in the 'parameter storage' procedure **15400** which, when traversed, yields entries in such an order. In an illustrative embodiment parameters are added to the content URI with empty string parameter values when no parameter values are available. Alternative, embodiments omit parameter-parameter value pairs for which no parameter value is available. Still further, in some embodiments the second resource identifier has neither parameters nor parameter values, while in still other embodiments, the second uniform resource identifier is of other forms including those known in the art.

Parameters relating to a particular viewer or household using the reproducing apparatus **1300** to initiate the request could also be used including, for example, age, gender, other demographic or psychographic parameters. Additionally, parameters relating to financial information including, for example, known payment instruments for a viewer may also be used. Parameters relating to financial information may be conveniently used in conjunction with applications of the invention to electronic commerce.

In addition, parameters and parameter values may be carried across links by functionality analogous to using the second URI as an absolute URI that acts as a BASE element for resolving relative URIs in accordance with the HTML specification (available World Wide Web Consortium (W3C), Massachusetts Institute of Technology, Laboratory for Computer Science, Cambridge, Massachusetts, U.S.A.).

### *ENCODING*

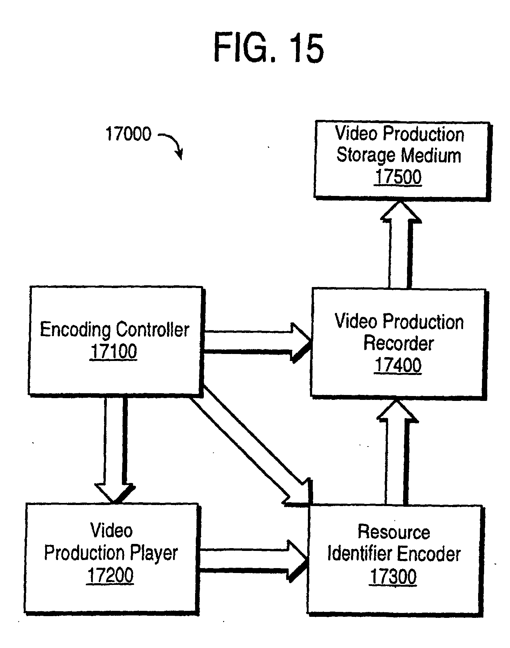

Another disclosed aspect, which is however not part of the present invention in the sense of Art. 82 EPC involves a method and system for encoding one or more series of resource identifiers in a video production. **Fig. 15** depicts 'series encoding' system **17000** for encoding one or more series of resource identifiers in a video production. The 'series encoding' system **17000** includes an encoding controller **17100**. The encoding controller **17100** controls aspects of the operation of a video production player **17200**, a resource identifier encoder **17300**, and a video production recorder **17400**. The encoding controller **17100** may be a programmed general purpose computer or may be special-purpose computing hardware.

The video production player **17200** communicates a video signal to the resource identifier encoder **17300** under the control of the encoding controller **17100**. In some embodiments the video production player **17200** could be a conventional video cassette player, in other embodiments, the video production player **17200** could be a random access video player, such as a DVD player, or a computer programmed to play a video file.

The resource identifier encoder **17300** receives the video signal from the video production player **17200** as an input video signal. The resource identifier encoder **17300** receives instructions from the encoding controller **17100** for embedding resource identifiers in the input video signal. The resource identifier encoder **17300** may be conventional closed-captioning equipment. In some embodiments the resource identifiers could be embedded in the VBI of a NTSC video signal; in others they could be embedded in a synchronized companion track to the video production. The resource identifier may be portions of triggers according to CEMA standard EIA- 1746 or analogous standard.

The resource identifier encoder **17300** generates an output video signal that comprises the input video signal and resource identifiers embedded therein according to instructions received from the encoding controller **17100**. The output video signal is communicated to a video production recorder **17400** where it is stored on a video production storage medium **17500**. The video production recorder **17400** may be, for example, a conventional video cassette recorder, DVD recorder, other device capable of recording a video signal, or device capable of storing a video file. The video production storage medium **17500** is suitably chosen for operation with the video production recorder **17400**.

In operation, the 'series encoding' system **17000** may work as follows. A user inputs information to the encoding controller **17100** regarding a series of resource identifiers for encoding in a video production. Next, the encoding controller **17100** determines responsive to the user input positions in the video production at which the resource identifiers should be embedded and appropriate resource identifiers for encoding at those positions. The encoding controller **17100** sends a signal to the video production player **17200**, the resource identifier encoder **17300**, and the video production recorder **17400** to initiate encoding. The video production player **17200** provides a video signal to the resource identifier encoder **17300**.

The encoding controller **17100** is able to determine the position in the video production which is being sent from the video production player **17200** to the resource identifier encoder **17300** at any given moment. The mechanism for achieving this function may vary with the particular video production player **17200**. In some embodiments, the encoding controller **17100** could be provided with the rate of playback the video production player **17200** and the encoding controller **17100** could track playback based on time. In other embodiments, the video production player **17200** could provide an output signal to the encoding controller **17100** which could be used for tracking. In still other embodiments, the video production player **17200** could provide random access and the encoding controller **17100** could provide the access position.

When the encoding controller **17100** determines that an appropriate position in the video production has been reached, the encoding controller **17100** sends a signal and the appropriate resource identifier to the resource identifier encoder **17300**. The resource identifier encoder **17300** embeds the resource identifier in the input video signal received from the video production player **17200**. An output is generated by the resource identifier encoder **17300** that comprises the input video signal and the embedded resource identifiers which is recorded on a video production storage medium **17500** by the video production recorder **17400**.

In an illustrative embodiment the video production storage medium **17500** is a video cassette and the video production played by the video production player **17200** may also be a videocassette. In this embodiment it can be seen that operation of the 'series encoding' system **17000** takes a raw video production played by the video production player **17200** and gives to the raw video production new qualities, properties, and combinations of information. Examples of new properties may include, for example, resource identifiers encoded on the video cassette in one or more particular patterns. Examples of new qualities may include, for example, that when the video cassette is communicated to compatible equipment, the compatible, the resource identifiers configure the compatible equipment to communicate a particular request message to a data network for receipt by, for example, a server. For example, the resource identifier may be seen as instructions that configure a client computing system to perform a particular task, e.g., sending a particular request to a network. In other embodiments the video production storage medium **17500** could be other media suitable for storing a video production.

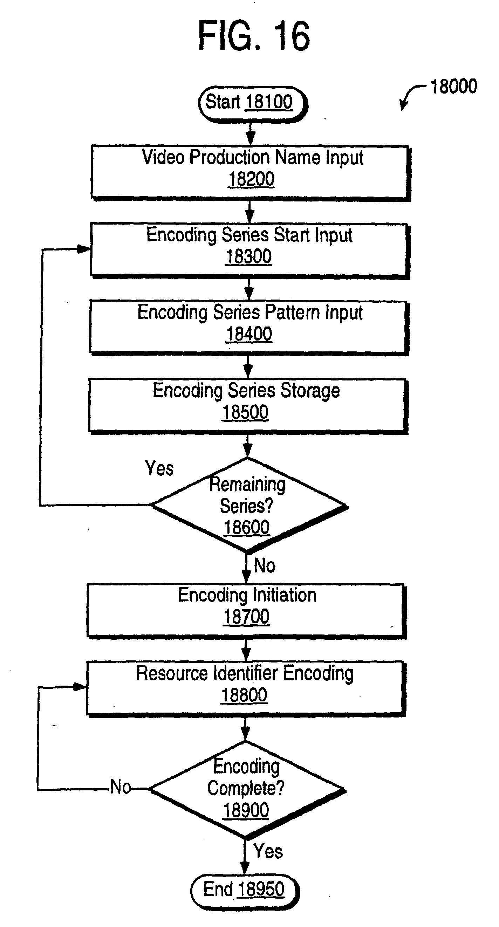

The 'series encoding' system **17000** is illustrative of structural elements that may perform steps of a method for encoding one or more series of resource identifiers in a video production. **Fig. 16** depicts a flow diagram of a 'series encoding' method **18000** for encoding one or more series of resource identifiers in a video production in accordance with an illustrative embodiment. For purposes of illustration, reference will be made to elements of the 'series encoding' system **17000** with the understanding that in other embodiments, other suitable structures may perform steps of the 'series encoding' method **18000**.

Process flow initiates at a 'start' terminal **18100** and continues to a 'video production name input' procedure **18200**. The 'video production name input' procedure **18200** provides a query for a name of a video production for encoding. Queries made in the illustrative embodiment of the 'series encoding' method **18000** may be made, for example, to a user or a database. The 'video production name input' procedure **18200** then receives and stores the name. Process flow continues to an 'encoding series start input' procedure **18300** that provides a query for a first starting position for a first series. The first starting position is conveniently input as a time input, for example, 5 minutes from the start of the video production, although a displacement measure or other suitable position identifier could be used in other embodiments.

Process flow continues to an 'encoding series pattern input' procedure **18400**. The 'encoding series pattern input' procedure **18400** provides a query for a first encoding pattern for the first series of resource identifiers. In some embodiments, the first encoding pattern may be a fixed interval so that elements of the first series could be placed in the video production at fixed intervals. In other embodiments a more complex pattern could be used; in some embodiments, a list of entries could be input and would thus provide the first encoding pattern.

Next, an 'encoding series storage' procedure **18500** computes the positions in the video production at which each of the first series of resource identifiers should be embedded and the appropriate resource identifiers for embedding at the positions. As noted, in some embodiments, each of the resource identifiers could be the same. In other embodiments, a portion of the resource identifiers could include a <position> portion relating to the position of the resource identifier in the video production. In still other embodiments a portion of the resource identifier could be a counting index. Many other schemes will be appreciated by one of skill in the art having the benefit of this disclosure within the spirit and scope of the invention as set forth in the appended claims. The 'encoding series storage' procedure **18500** then stores the positions in the video production at which each of the first series of resource identifiers should be embedded and the appropriate resource identifiers for embedding at the positions.

Next, a 'remaining series' decision procedure **18600** determines whether additional encoding series are desired for addition to the video production. In an illustrative embodiment the 'remaining series' decision procedure **18600** makes this determination by querying a user. If an additional encoding series is desired, the 'remaining series' decision procedure **18600** exits through its 'yes' branch and process flow return to the 'encoding series start input' procedure **18300** to receive a next starting position and a next encoding pattern. When plural encoding series are desired, the 'encoding series storage' procedure **18500** maintains an updated list of elements of the plural encoding series in order that all resource identifiers of the plural encoding series may be embedded in the video production during a single pass through the video production. When no additional encoding series are desired, the 'remaining series' decision procedure **18600** exits through its 'no' branch and process flow continues to an 'encoding initiation' procedure **18700**.

The 'encoding initiation' procedure **18700** initiates the process of embedding the resource identifiers from the one or more encoding series in the video production. The 'encoding initiation' procedure **18700** sends a signal to the video production player **17200**, the resource identifier encoder **17300**, and the video production recorder **17400** that begins the encoding process under the control of the encoding controller **17100** that typically performs the 'encoding initiation' procedure **18700**.

Process flow enters a 'resource identifier encoding' procedure **18800** that detects when a position in the video production is reached where a resource identifier should be embedded. The 'resource identifier encoding' procedure **18800** then provides a signal to the resource identifier encoder **17300** that a resource identifier should be embedded along with the resource identifier. The resource identifier encoder **17300** embeds the resource identifier. An 'encoding complete' decision procedure **18900** determines when all resource identifiers have been embedded. The 'encoding complete' decision procedure **18900** exits though its 'no' branch and loops back to the 'resource identifier encoding' procedure **18800** while resource identifiers remain to be embedded. When no resource identifiers remain to be embedded, the 'encoding complete' decision procedure **18900** exits through its 'yes' branch and process flow completes through an 'end' terminal **18950**.

It will be appreciated that the 'series encoding' method **18000** could be used to encode both simple and complex patterns of resource identifier in a video production. It may be desirable for identical resource identifiers to be embedded at periodic intervals in a video production; in this way it can be assured that if a viewer joins a video production after the beginning of the video production, they will be presented with the opportunity to retrieve resources available via the resource identifier. It may further be desirable to provide resource identifiers every T1 minutes starting with the S1'th minute, for some arbitrary positive T1 and S1, e.g. every five minutes starting with the second minute of the video production. The 'series encoding' method **18000** may be used to provide such an arrangement by providing the S1 'th minute in the 'encoding series start input' procedure **18300** and a fixed interval of T1 minutes in the 'encoding series pattern input' procedure **18400**. Similarly it may be desirable for a first series and a second series of resource identifiers to be provided, starting with the S 1 'th and S2'th minutes, respectively, and continuing every T1 and T2 minutes, respectively. The 'series encoding' method **18000** may be used to provide such an arrangement by providing the S1 'th minute and the T1'th interval in a first iteration of the 'encoding series start input' procedure **18300** and the 'encoding series pattern input' procedure **18400** and providing the S2'th minute and the T2'th interval in a second iteration of the 'encoding series start input' procedure **18300** and the 'encoding series pattern input' procedure **18400**. One of skill in the art, having the benefit of this disclosure, will appreciate that arbitrarily complex or numerous encoding patterns may be provided in conjunction with the 'series encoding' method **18000**.

Although the present invention has been described in terms of illustrative embodiments, one skilled in the art will understand that various modifications and alterations may be made without departing from the scope of the invention. Accordingly, the scope of the invention is not to be limited to the particular embodiments discussed herein, but should be defined only by the appended claims.

**Claims**

1.  A method for providing action selections to an image referencing a product (6100) in a video production, said method comprising:

    communicating a video production (1100) to a reproducing apparatus (1300), said video production (1100) comprising a placement zone (1110) and a trigger zone (1120) at least partially coincident with said placement zone (1110), wherein said trigger zone (1120) comprises a trigger resource identifier, and wherein said placement zone (1110) comprises an image referencing a product;
    receiving a first request (1340) from said reproducing apparatus (1300), said first request comprising a first resource identifier corresponding to said trigger resource identifier, said first resource identifier extracted from a video production (1100) communicated to said reproducing apparatus (1300);
    determining a second resource identifier comprising an identified parameter and parameter value associated with said parameter responsive to said first resource identifier;
    redirecting said first request to said second resource identifier;
    communicating to said reproducing apparatus (1300) an indication (1360) that an action selection interface (6300) associated with said product is available in response to said first request; and
    communicating to said reproducing apparatus (1300) a characterization (1380) of said action selection interface, wherein said action selection interface comprises a selectable action (6400).

2.  The method according to claim 1, further comprising:

    receiving an indication (1360) of the selection of said selectable action;
    retrieving an action resource (1500) associated with said selectable action; and
    communicating said action resource to said reproducing apparatus (1300).

3.  The method according to claim 1, wherein said video production (1100) is communicated over a television network.

4.  The method according to claim 1, wherein said video production (1100) is distributed in a tangible medium.

5.  The method according to claim 1, wherein said video production (1100) is transferred over a computer network.

6.  The method according to claim 1, wherein said indication of said action selection interface comprises a visual highlight.

7.  The method according to claim 6, wherein said reproducing apparatus (1300) is coupled to a viewing device (1200) and said visual highlight is communicated to said viewing device only if said reproducing apparatus (1300) supports said action selection interface.

8. The method according to claim 1, wherein said selectable action comprises a product purchase action (9000).

9. The method according to claim 1, wherein said selectable action comprises a promotion participation action (7000).

10. The method according to claim 1, wherein said selectable action comprises an information request action (8000).

11. The method according to claim 2, wherein said action resource is selected responsive to a profile of a user associated with said reproducing apparatus (1300).

12. A method for creating a video production for use with a method according to claim 1, said method comprising:

selecting a placement zone (1110) in a video production (1100), said placement zone (1110) comprising an image referencing a product;
selecting a trigger zone (1120) in said video production (1100) at least partially coincident with said placement zone (1110) ;
embedding (4000) a first reference in said trigger zone (1120) in said video production (1100) to said action selection interface (6300), wherein said first reference comprises a trigger resource identifier utilized for generating a first resource identifier corresponding to said trigger resource identifier, and said first source identifier is utilized for determining a second resource identifier comprising a parameter and a parameter value associated with said parameter responsive to said first resource identifier, and wherein said first resource identifier when reproduced on compatible equipment and communicated to a display causes said action selection interface (6300) to be displayed on said reproducing apparatus (1300), said action selection interface comprising said selectable action (6400) selectable by a viewer.

13. The method according to claim 12, wherein said video production (1100) comprises a first track comprising said trigger zone (1120) and a second track comprising said placement zone (1110), wherein said first and second tracks are synchronized.

14. A method according to claim 1, wherein determining a second resource identifier responsive to said first resource identifier comprises:

identifying a parameter of a first type and a parameter of a second type, wherein said parameter of a first type is identified responsive to a header in said first request; and
identifying a first parameter value associated with said parameter of a first type and a second parameter value associated with said parameter of a second type, wherein said first parameter value is identified responsive to an expression associated with said header.

15. A method according to claim 14, wherein redirecting said first request to said second resource identifier comprises sending an internal redirect message.

16. A method according to claim 14, wherein redirecting said first request to said second resource identifier comprises sending an external redirect message.

17. A method according to claim 16, wherein said external redirect message is communicated to said reproducing apparatus (1300).

18. A system for providing action selections to an image referencing a product in a video production (1100) and operable for use with a reproducing apparatus (1300) configured for communication with a display (1200), a data network (1400), and a selection device (1700), comprising:

a video production communication device, said communicating device communicating a video production (1100) comprising a placement zone (1110) and a trigger zone (1120) to said reproducing apparatus (1300); and
an action resource provider (1500) configured for communication with said reproducing apparatus (1300) via said data network, said action resource provider receiving a first request from said reproducing apparatus (1300) corresponding to a trigger in said trigger zone (1120) of said video production (1100), said first request comprising a first resource identifier, said action resource provider determining a second resource identifier comprising a identified parameter and parameter value associated with said parameter responsive to said first resource identifier to redirect said first request to said second resource identifier and to communicate a characterization (1380) of an action selection interface to said reproducing apparatus (1300) responsive to said first request, said action selection interface comprising a selectable action (6400).

19. The system according to claim 18, wherein said action resource provider (1500) further:

receives a request from said reproducing apparatus (1300) corresponding to said selectable action;
retrieves an action resource associated with said selectable action; and
communicates an action resource associated with said selectable action to said reproducing apparatus (1300).

20. A system according to claim 18, for providing addressed network content in connection with an enhanced video production (1100) and a data network further comprising:

a first server (12500) communicatively coupled with said data network, said first server configured to perform steps comprising:

receiving said first request comprising said first resource identifier;
determining said second resource identifier responsive to said first resource identifier, said second resource identifier for retrieving said associated response content; and
redirecting said first request to said second resource identifier, wherein thereafter a response is communicated to said reproducing apparatus (1300).

21. A system according to claim 20, further comprising a second server (12800) and wherein said second resource identifier is addressable via said second server.

22. A system according to claim 18, wherein said action resource provider (1500) comprises a processor (10010), a memory (10020), and an-input output system (10030), and programmed instructions configuring said provider to provide:

a first request receiver for receiving said first request from said reproducing apparatus (1300), said first request comprising said first resource identifier, said first resource identifier extracted from a video production (1100) communicated to said reproducing apparatus (1300), said first resource identifier independent of associated response content;
a second resource identifier determiner for determining said second resource identifier responsive, to said first resource identifier, said second resource identifier for retrieving said associated response content; and
a first request redirector for redirecting said first request to said second resource identifier, wherein thereafter a response is communicated to said reproducing apparatus (1300).

23. A system according to claim 22, wherein the second resource identifier determiner comprises:

a parameter identifier for identifying a parameter;
a parameter value identifier for identifying a parameter value associated with said parameter; and
a second resource identifier determiner for determining a second resource identifier comprising said parameter and said parameter value responsive to said first resource identifier.

24. A system according to claim 23, wherein the second resource identifier determiner comprises:

a parameter identifier for identifying a parameter of a first type and a parameter of a second type, wherein said parameter of a first type is identified responsive to a header in said first request; and
a parameter value identifier for identifying a first parameter value associated with said parameter of a first type and a second parameter value associated with said parameter of a second type, wherein said first parameter value is identified responsive to an expression associated with said header.

25. A system according to claim 22, wherein the first request redirector comprises an internal redirector for sending an internal redirect message.

26. A system according to claim 22, wherein the first request redirector comprises an external redirector for sending an external redirect message.

27. A system according to claim 22, wherein said external redirect message is communicated to said reproducing apparatus (1300).

28. A system according to claim 22, wherein:

said first request receiver comprises means for receiving a first request from a reproducing apparatus (1300), said first request comprising a first resource identifier, said first resource identifier extracted from a video production (1100) communicated to said reproducing apparatus (1300) ;
said second resource identifier determiner comprises means for determining a second resource identifier responsive to said first resource identifier; and
said first request redirector comprises means for redirecting said first request to said second resource identifier, wherein thereafter a response is communicated to said reproducing apparatus (1300).

**Patentansprüche**

1. Verfahren zum Bereitstellen von Aktionsauswahlen für eine auf ein Produkt (6100) hinweisende Abbildung in einer Videoproduktion, wobei das Verfahren folgendes umfasst:

Kommunizieren einer Videoproduktion (1100) an ein Reproduktionsgerät (1300), wobei die Videoproduktion (1100) eine Platzierungszone (1110) und eine mindestens teilweise mit der Platzierungszone (1110) übereinstimmende Auslöserzone (1120) umfasst, wobei die Auslöserzone (1120) einen Auslöser-Ressourcenbezeichner umfasst und wobei die Platzierungszone (1110) eine auf ein Produkt hinweisende Abbildung umfasst;
Empfangen einer ersten Abfrage (1340) von dem Reproduktionsgerät (1300), wobei die erste Abfrage einen mit dem Auslöser-Ressourcenbezeichner korrespondierenden ersten Ressourcenbezeichner umfasst und wobei der erste Ressourcenbezeichner einer an das Reproduktionsgerät (1300) kommunizierten Videoproduktion (1100) entnommen wird;
Bestimmen eines zweiten Ressourcenbezeichners, welcher einen bezeichneten Parameter und einen zum Parameter zugehörigen, auf den ersten Ressourcenbezeichner reagierenden Parameterwert umfasst;
Umleiten der ersten Anfrage auf den zweiten Ressourcenbezeichner;
Kommunizieren eines Hinweises (1360) an das Reproduktionsgerät (1300) , dass eine zum Produkt zugehörige Aktionsauswahlschnittstelle (6300) in Reaktion auf die erste Abfrage verfügbar ist; und
Kommunizieren einer Charakterisierung (1380) der Aktionsauswahlschnittstelle an das Reproduktionsgerät (1300), wobei die Aktionsauswahlschnittstelle eine wählbare Aktion (6400) umfasst.

2. Verfahren nach Anspruch 1, ferner umfassend:

Empfangen einer Anzeige (1360) der Auswahl der wählbaren Aktion;
Abrufen einer zur wählbaren Aktion zugehörigen Aktionsressource (1500);
Kommunizieren der Aktionsressource an das Reproduktionsgerät (1300).

3. Verfahren nach Anspruch 1, wobei die Videoproduktion (1100) über ein Fernsehnetzwerk kommuniziert wird.

4. Verfahren nach Anspruch 1, wobei die Videoproduktion (1100) in einem gegenständlichen Medium vertrieben wird.

5. Verfahren nach Anspruch 1, wobei die Videoproduktion (1100) über ein Computernetzwerk übertragen wird.

6. Verfahren nach Anspruch 1, wobei die Anzeige der Aktionsauswahlschnittstelle eine visuelle Markierung umfasst.

7. Verfahren nach Anspruch 6, wobei das Reproduktionsgerät (1300) mit einem Beobachtungsgerät (1200) gekoppelt ist und die visuelle Markierung nur dann an das Beobachtungsgerät kommuniziert wird, wenn das Reproduktionsgerät (1300) die Aktionsauswahlschnittstelle unterstützt.

8. Verfahren nach Anspruch 1, wobei die wählbare Aktion eine ProduktkaufAktion (9000) umfasst

9. Verfahren nach Anspruch 1, wobei die wählbare Aktion eine VerkaufsförderungsbeteilungsAktion (7000) umfasst.

**10.** Verfahren nach Anspruch 1, wobei die wählbare Aktion eine InformationsabfrageAktion (8000) umfasst.

**11.** Verfahren nach Anspruch 2, wobei die Aktionsressource in Reaktion auf ein Profil eines zum Reproduktionsgerät (1300) zugehörigen Nutzers ausgewählt wird.

**12.** Verfahren zum Herstellen einer Videoproduktion zum Verwenden mit einem Verfahren nach Anspruch 1, wobei das Verfahren folgendes umfasst:

Auswählen einer Platzierungszone (1110) in einer Videoproduktion (1100), wobei die Platzierungszone (1110) eine auf ein Produkt hinweisende Abbildung umfasst;

Äuswählen einer zumindest teilweise mit der Platzierungszone übereinstimmenden Auslöserzone (1120) in der Videoproduktion (1100);

Einbetten (4000) eines ersten Verweises in der Auslöserzone (1120) in der Videoproduktion (1100) auf die Aktionsauswahlschnittstelle (6300), wobei der erste Verweis einen Auslöserressourcenbezeichner umfasst, welcher zum Erzeugen eines mit dem Auslöserressourcenbezeichner korrespondierenden ersten Ressourcenbezeichners verwendet wird, und wobei der erste Ressourcenbezeichner zum Bestimmen eines zweiten Ressourcenbezeichners verwendet wird, welcher in Reaktion auf den ersten Ressourcenbezeichner einen Parameter und einen zum Parameter zugehörigen Parameterwert umfasst, und wobei der erste Ressourcenbezeichner, wenn er auf einer kompatiblen Einrichtung reproduziert und an einen Bildschirm kommuniziert wird, bewirkt, dass die Aktionsauswahlschnittstelle (6300) auf dem Reproduktionsgerät (1300) dargestellt wird, wobei die Aktionsauswahlschnittstelle die durch einen Nutzer wählbare wählbare Aktion (6400) umfasst.

**13.** Verfahren nach Anspruch 12, wobei die Videoproduktion (1100) eine die Auslöserzone (1120) umfassende erste Spur und eine die Platzierungszone (1110) umfassende zweite Spur umfasst, wobei die erste und zweite Spur synchronisiert sind.

**14.** Verfahren nach Anspruch 1, wobei das Bestimmen des zweiten Ressourcenbezeichners in Reaktion auf den ersten Ressourcenbezeichner folgendes umfasst:

Bezeichnen eines Parameters eines ersten Typs und eines Parameters eines zweiten Typs, wobei der Parameter des ersten Typs in Reaktion auf eine Kopfzeile in der ersten Abfrage bezeichnet wird; und Bezeichnen eines zum Parameter des ersten Typs gehörigen ersten Parameterwertes und eines zum Parameter des zweiten Typs gehörigen zweiten Parameterwertes, wobei der erste Parameterwert in Reaktion auf einen zur Kopfzeile gehörigen Ausdruck bezeichnet wird.

**15.** Verfahren nach Anspruch 14, wobei das Umleiten der ersten Anfrage an den zweiten Ressourcenbezeichner das Senden einer internen Umleitungsbotschaft umfasst.

**16.** Verfahren nach Anspruch 14, wobei das Umleiten der ersten Anfrage an den zweiten Ressourcenbezeichner das Senden einer externen Umleitungsbotschaft umfasst.

**17.** Verfahren nach Anspruch 16, wobei die externe Umleitungsbotschaft an das Reproduktionsgerät (1300) kommuniziert wird.

**18.** System zum Bereitstellen von Aktionsauswahlen für eine auf ein Produkt hinweisende Abbildung in einer Videoproduktion (1100), betreibbar zum Verwenden mit einem Reproduktionsgerät (1300), welches zur Kommunikation mit einem Bildschirm (1200), einem Datennetzwerk (1400) und einer Auswahleinheit (1700) konfiguriert ist, umfassend:

eine Videoproduktionskommunikationseinrichtung, welche eine eine Platzierungszone (1110) und eine Auslöserzone (1120) umfassende Videoproduktion (1100) an das Reproduktionsgerät (1300) kommuniziert; und einen über ein Datennetzwerk zur Kommunikation mit dem Reproduktionsgerät (1300) konfigurierten Aktionsressourcenanbieter (1500), welcher eine mit einem Auslöser aus der Auslöserzone (1120) der Videoproduktion (1100) korrespondierende erste Abfrage vom Reproduktionsgerät (1300) empfängt, welche einen ersten Ressourcenbezeichner enthält, wobei der Aktionsressourcenanbieter in Reaktion auf den ersten Ressourcenbezeichner einen zweiten Ressourcenbezeichner bestimmt, welcher einen bezeichneten Parameter und einen zum Parameter gehörigen Parameterwert umfasst, um die erste Abfrage an den zweiten Ressourcenbezeichner umzuleiten und eine Charakterisierung (1380) einer Aktionsauswahlschnittstelle an das Reproduktionsgerät (1300) in Reaktion auf die erste Abfrage zu kommunizieren, wobei die Aktionsauswahlschnittstelle eine wählbare Aktion (6400) umfasst.

19. System nach Anspruch 18, wobei der Aktionsressourcenanbieter (1500) ferner.

eine mit der auswählbaren Aktion korrespondierende Abfrage vom Reproduktionsgerät (1300) empfängt;
eine zur wählbaren Aktion gehörige Aktionsressource abruft; und
eine zur wählbaren Aktion gehörige Aktionsquelle an das Reproduktionsgerät (1300) kommuniziert.

20. System nach Anspruch 18 zum Bereitstellen adressierten Netzwerkinhalts in Verbindung mit einer weiterentwikkelten Videoproduktion (110) und einem Datennetzwerk, ferner umfassend:

einen kommunikativ mit dem Datennetzwerk gekoppelten ersten Server (12500), konfiguriert zum Durchführen von Schritten, umfassend:

Empfangen der den ersten Ressourcenbezeichner umfassenden ersten Abfrage;
Bestimmen des zweiten Ressourcenbezeichners in Reaktion auf den ersten Ressourcenbezeichner zum Abfragen zugehörigen Antwortinhalts; und
Umleiten der ersten Abfrage auf den zweiten Ressourcenbezeichner, wobei danach eine Antwort an das Reproduktionsgerät (1300) kommuniziert wird.

21. System nach Anspruch 20, ferner umfassend einen zweiten Server (12800) und wobei der zweite Ressourcenbezeichner über den zweiten Server adressierbar ist.

22. System nach Anspruch 18, wobei der Aktionsressourcenanbieter (1500) einen Prozessor (10010), einen Speicher (10020) und ein Input-Output-System (10030) und programmierte Instruktionen umfasst, welche den Anbieter konfigurieren zum Bereitstellen von:

einem Empfänger der ersten Abfrage zum Empfangen der ersten Abfrage vom Reproduktionsgerät (1300), wobei die erste Abfrage den ersten Ressourcenbezeichner umfasst, wobei der erste Ressourcenbezeichner einer an das Reproduktionsgerät (1300) kommunizierten Videoproduktion (1100) entnommen wird, wobei der erste Ressourcenbezeichner unabhängig vom zugehörigen Antwortinhalt ist;
ein Determinator des zweiten Ressourcenbezeichners zum Bestimmen des zweiten Ressourcenbezeichners in Reaktion auf den ersten Ressourcenbezeichner, wobei der zweite Ressourcenbezeichner zum Abrufen des zugehörigen Antwortinhalts verwendet wird; und
ein Umleiter der ersten Abfrage zum Umleiten der ersten Abfrage auf den zweiten Ressourcenbezeichner, wobei danach eine Antwort an das Reproduktionsgerät (1300) kommuniziert wird.

23. System nach Anspruch 22, wobei der Determinator des zweiten Ressourcenbezeichners folgendes umfasst:

einen Parameterbezeichner zum Bezeichnen eines Parameters;
einen Parameterwertbezeichner zum Bezeichnen eines zum Parameter gehörigen Parameterwerts; und
einen Determinator des zweiten Ressourcenbezeichners zum Bestimmen eines den Parameter und den Parameterwert umfassenden zweiten Ressourcenbezeichners in Reaktion auf den ersten Ressourcenbezeichner.

24. System nach Anspruch 23, wobei der Determinator des zweiten Ressourcenbezeichners folgendes umfasst:

einen Parameterbezeichner zum Bezeichnen eines Parameters des ersten Typs und eines Parameters des zweiten Typs, wobei der Parameter des ersten Typs in Reaktion auf eine Kopfzeile in der ersten Abfrage bezeichnet wird; und
einem Parameterwertbezeichner zum Bezeichnen eines zu dem Parameter ersten Typs gehörigen ersten Parameterwertes und eines zu dem Parameter zweiten Typs gehörigen zweiten Parameterwertes, wobei der erste Parameterwert in Reaktion auf einen zu der Kopfzeile gehörigen Ausdruck bezeichnet wird.

25. System nach Anspruch 22, wobei der Umleiter der ersten Abfrage einen internen Umleiter zum Senden einer internen Umleitungsnachricht umfasst.

**26.** System nach Anspruch 22, wobei der Umleiter der ersten Abfrage einen externen Umleiter zum Senden einer externen Umleitungsnachricht umfasst.

**27.** System nach Anspruch 22, wobei die externe Umleitungsbotschaft an das Reproduktionsgerät (1300) kommuniziert wird.

**28.** System nach Anspruch 22, wobei:

der Empfänger der ersten Abfrage Mittel zum Empfangen einer ersten Abfrage von einem Reproduktionsgerät (1300) umfasst, die erste Abfrage einen ersten Ressourcenbezeichner umfasst, wobei der erste Ressourcenbezeichner einer Videoproduktion (1100) entnommen und an das Reproduktionsgerät (1300) kommuniziert wurde;
der Determinator des zweiten Ressourcenbezeichners Mittel zum Bestimmen eines zweiten Ressourcenbezeichners in Reaktion auf den ersten Ressourcenbezeichner umfasst; und
der Umleiter der ersten Abfrage Mittel zum Umleiten der ersten Abfrage an den zweiten Ressourcenbezeichner umfasst, wobei danach eine Antwort an das Reproduktionsgerät (1300) kommuniziert wird.

**Revendications**

**1.** Procédé pour appliquer des sélections d'action à une image référençant un produit (6100) dans une production vidéo, ledit procédé comprenant :

la communication d'une production vidéo (1100) à un dispositif de reproduction (1300), ladite production vidéo (1100) comprenant une zone de placement (1110) et une zone de déclenchement (1120) coïncidant au moins partiellement avec ladite zone de placement (1110), dans lequel ladite zone de déclenchement (1120) comprend un identificateur de ressource de déclenchement, et dans lequel ladite zone de placement (1110) comprend une image référençant un produit;
la réception d'une première requête (1340) provenant dudit dispositif de reproduction (1300), ladite première requête comprenant un premier identificateur de ressource correspondant audit identificateur de ressource de déclenchement, ledit premier identificateur de ressource étant extrait d'une production vidéo (1100) communiquée audit dispositif de reproduction (1300);
la détermination d'un deuxième identificateur de ressource comprenant un paramètre identifié et une valeur de paramètre associée audit paramètre en réponse audit premier identificateur de ressource ;
le réadressage de ladite première requête audit deuxième identificateur de ressource ;
la communication audit dispositif de reproduction (1300) d'une indication (1360) qu'une interface de sélection d'action (6300) associée audit produit' est disponible en réponse à ladite première requête ; et
la communication audit dispositif de reproduction (1300) d'une caractérisation (1380) de ladite interface de sélection d'action, dans lequel ladite interface de sélection d'action comprend une action sélectionnable (6400).

**2.** Procédé selon la revendication 1, comprenant en outre:

la réception d'une indication (1360) de la sélection de ladite action sélectionnable ;
la récupération d'une ressource d'action (1500) associée à ladite action sélectionnable ; et
la communication de ladite ressource d'action audit dispositif de reproduction (1300).

**3.** Procédé selon la revendication 1, dans lequel ladite production vidéo (1100) est communiquée sur un réseau de télévision.

**4.** Procédé selon la revendication 1, dans lequel ladite production vidéo (1100) est distribuée dans un milieu tangible.

**5.** Procédé selon la revendication 1, dans lequel ladite production vidéo (1100) est transférée sur un réseau informatique.

**6.** Procédé selon la revendication 1, dans lequel ladite indication de ladite interface de sélection d'action comprend une mise en évidence visuelle.

**7.** Procédé selon la revendication 6, dans lequel ledit dispositif de reproduction (1300) est couplé à un dispositif de visualisation (1200) et ladite mise en évidence visuelle n'est communiquée audit dispositif de visualisation que si ledit dispositif de reproduction (1300) prend en charge ladite interface de sélection d'action.

**8.** Procédé selon la revendication 1, dans lequel ladite action sélectionnable comprend une action d'achat de produit (9000).

**9.** Procédé selon la revendication 1, dans lequel ladite action sélectionnable comprend une action de participation à une promotion (7000).

**10.** Procédé selon la revendication 1, dans lequel ladite action sélectionnable comprend une action de requête d'informations (8000).

**11.** Procédé selon la revendication 2, dans lequel ladite ressource d'action est sélectionnée en réponse à un profil d'un utilisateur associé audit dispositif de reproduction (1300).

**12.** Procédé pour créer une production vidéo destinée à être utilisée avec un procédé selon la revendication 1, ledit procédé comprenant :

la sélection d'une zone de placement (1110) dans une production vidéo (1100), ladite zone de placement (1110) comprenant une image référençant un produit ;
la sélection d'une zone de déclenchement (1120) dans ladite production vidéo (1100) coïncidant au moins partiellement avec ladite zone de placement (1110) ;
l'intégration (4000) d'une première référence de ladite zone de déclenchement (1120) de ladite production vidéo (1100) à ladite interface de sélection d'action (6300), dans lequel ladite première référence comprend un identificateur de ressource de déclenchement utilisé pour générer un premier identificateur de ressource correspondant audit identificateur de ressource de déclenchement, et ledit premier identificateur de ressource est utilisé pour déterminer un deuxième identificateur de ressource comprenant un paramètre et une valeur de paramètre associée audit paramètre en réponse audit premier identificateur de ressource, et dans lequel ledit premier identificateur de ressource, lorsqu'il est reproduit sur un équipement compatible et communiqué à un affichage, provoque l'affichage de ladite interface de sélection d'action (6300) sur ledit dispositif de reproduction (1300), ladite interface de sélection d'action comprenant ladite action sélectionnable (6400) sélectionnable par un téléspectateur.

**13.** Procédé selon la revendication 12, dans lequel ladite production vidéo (1100) comprend une première piste comprenant ladite zone de déclenchement (1120) et une deuxième piste comprenant ladite zone de placement (1110), dans lequel lesdites première et deuxième pistes sont synchronisées.

**14.** Procédé selon la revendication 1, dans lequel la détermination d'un deuxième identificateur de ressource en réponse audit premier identificateur de ressource comprend :

l'identification d'un paramètre d'un premier type et d'un paramètre d'un deuxième type, dans lequel ledit paramètre d'un premier type est identifié en réponse à un en-tête dans ladite première requête ; et
l'identification d'une première valeur de paramètre associée audit paramètre d'un premier type et d'une deuxième valeur de paramètre associée audit paramètre d'un deuxième type, dans lequel ladite première valeur de paramètre est identifiée en réponse à une expression associée audit en-tête.

**15.** Procédé selon la revendication 14, dans lequel le réadressage de ladite première requête audit deuxième identificateur de ressource comprend l'envoi d'un message de réadressage interne.

**16.** Procédé selon la revendication 14, dans lequel le réadressage de ladite première requête audit deuxième identificateur de ressource comprend l'envoi d'un message de réadressage externe.

**17.** Procédé selon la revendication 16, dans lequel ledit message de réadressage externe est communiqué audit dispositif de reproduction (1300).

**18.** système pour appliquer des sélections d'action à une image référençant un produit dans une production vidéo (1100) et pouvant être mis en oeuvre pour une utilisation avec un dispositif de reproduction (1300) configuré pour communiquer avec un affichage (1200), un réseau de données (1400) et un dispositif de sélection (1700), comprenant:

un dispositif de communication de production vidéo, ledit dispositif de communication communiquant une production vidéo (1100) comprenant une zone de placement (1110) et une zone de déclenchement (1120) audit dispositif de reproduction (1300) ; et

un fournisseur de ressource d'action (1500) configuré pour communiquer avec ledit dispositif de reproduction (1300) par l'intermédiaire dudit réseau de données, ledit fournisseur de ressource d'action recevant une première requête provenant dudit dispositif de reproduction (1300) correspondant à un déclenchement dans ladite zone de déclenchement (1120) de ladite production vidéo (1100), ladite première requête comprenant un premier identificateur de ressource, ledit fournisseur de ressource d'action déterminant un deuxième identificateur de ressource comprenant un paramètre identifié et une valeur de paramètre associée audit paramètre en réponse audit premier identificateur de ressource pour réadresser ladite première requête audit deuxième identificateur de ressource et pour communiquer une caractérisation (1380) d'une interface de sélection d'action audit dispositif de reproduction (1300) en réponse à ladite première requête, ladite interface de sélection d'action comprenant une action sélectionnable (6400).

**19.** Système selon la revendication 18, dans lequel ledit fournisseur de ressource d'action (1500) en outre :

reçoit une requête provenant dudit dispositif de reproduction (1300) correspondant à ladite action sélectionnable ;

récupère une ressource d'action associée à ladite action sélectionnable ; et

communique une ressource d'action associée à ladite action sélectionnable audit dispositif de reproduction (1300).

**20.** Système selon la revendication 18, pour fournir un contenu de réseau adressé en relation avec une production vidéo améliorée (1100) et un réseau de données comprenant en outre :

un premier serveur (12500) couplé pour communiquer avec ledit réseau de données, ledit premier serveur étant configuré pour effectuer les étapes comprenant :

la réception de ladite première requête comprenant ledit premier identificateur de ressource ;

la détermination dudit deuxième identificateur de ressource en réponse audit premier identificateur de ressource, ledit deuxième identificateur de ressource servant à récupérer ledit contenu de réponse associé ; et

le réadressage de ladite première requête audit deuxième identificateur de ressource, dans lequel, ensuite, une réponse est communiquée audit dispositif de reproduction (1300).

**21.** Système selon la revendication 20, comprenant en outre un deuxième serveur (12800), et dans lequel ledit deuxième identificateur de ressource est adressable par l'intermédiaire dudit deuxième serveur.

**22.** Système selon la revendication 18, dans lequel ledit fournisseur de ressource d'action (1500) comprend un processeur (10010), une mémoire (10020) et un système d'entrée-sortie (10030), et des instructions programmées configurant ledit fournisseur pour réaliser :

un récepteur de première requête pour recevoir ladite première requête provenant dudit dispositif de reproduction (1300), ladite première requête comprenant ledit premier identificateur de ressource, ledit premier identificateur de ressource étant extrait d'une production vidéo (1100) communiquée audit dispositif de reproduction (1300), ledit premier identificateur de ressource étant indépendant du contenu de réponse associé ;

un dispositif de détermination de deuxième identificateur de ressource pour déterminer ledit deuxième identificateur de ressource en réponse audit premier identificateur de ressource, ledit deuxième identificateur de ressource servant à récupérer ledit contenu de réponse associé ; et

un dispositif de réadressage de première requête pour réadresser ladite première requête audit deuxième identificateur de ressource, dans lequel, ensuite, une réponse est communiquée audit dispositif de reproduction (1300).

**23.** Système selon la revendication 22, dans lequel le dispositif de détermination de deuxième identificateur de ressource comprend :

un identificateur de paramètre pour identifier un paramètre;

un identificateur de valeur de paramètre pour identifier une valeur de paramètre associée audit paramètre ; et

un dispositif de détermination de deuxième identificateur de ressource pour déterminer un deuxième identificateur de ressource comprenant ledit paramètre et ladite valeur de paramètre en réponse audit premier identificateur de ressource.

24. Système selon la revendication 23, dans lequel le dispositif de détermination de deuxième identificateur de ressource comprend :

un identificateur de paramètre pour identifier un paramètre d'un premier type et un paramètre d'un deuxième type, dans lequel ledit paramètre d'un premier type est identifié en réponse à un en-tête dans ladite première requête ; et

un identificateur de valeur de paramètre pour identifier une première valeur de paramètre associée audit paramètre d'un premier type et une deuxième valeur de paramètre associée audit paramètre d'un deuxième type, dans lequel ladite première valeur de paramètre est identifiée en réponse à une expression associée audit en-tête.

25. Système selon la revendication 22, dans lequel le dispositif de réadressage de première requête comprend un dispositif de réadressage interne pour envoyer un message de réadressage interne.

26. Système selon la revendication 22, dans lequel le dispositif de réadressage de première requête comprend un dispositif de réadressage externe pour envoyer un messaae de réadressage externe.

27. Système selon la revendication 22, dans lequel ledit message de réadressage externe est communiqué audit dispositif de reproduction (1300).

28. Système selon la revendication 22, dans lequel:

ledit récepteur de première requête comprend des moyens pour recevoir une première requête provenant d'un dispositif de reproduction (1300), ladite première requête comprenant un premier identificateur de ressource, ledit premier identificateur de ressource étant extrait d'une production vidéo (1100) communiquée audit dispositif de reproduction (1300) ;

ledit dispositif de détermination de deuxième identificateur de ressource comprend des moyens pour déterminer un deuxième identificateur de ressource en réponse audit premier identificateur de ressource ; et

ledit dispositif de réadressage de première requête comprend des moyens pour réadresser ladite première requête audit deuxième identificateur de ressource, dans lequel, ensuite, une réponse est communiquée audit dispositif de reproduction (1300).

FIG. 1

FIG. 2

**FIG. 3**

1300

4000

Start <u>4100</u>

Video Production Selection
<u>4200</u>

ASI Location Selection
<u>4300</u>

ASI Reference Embedding
<u>4400</u>

Yes

Additional
Locations?
<u>4500</u>

FIG. 4

No

End <u>4600</u>

5000

Start 5100

FIG. 5

Video Production Communication
5200

ASI Indication Communication
5300

ASI Characterization Communication
5400

Action
Selection?
5500

──Yes   ──No

Action Resource Retrieval
5600

Action Resource Communication
5700

Additional
Actions?
5800

──Yes   ──No

End 5900

33

FIG. 6A

FIG. 6B

FIG. 6C

FIG. 6D

# FIG. 7

7000

Start 7100

Promotion Information Communication
7200

Participant Information Receipt
7300

Participant Registration
7400

Additional
Participation?
7500

No

Yes

Next Page(s) Communication
7600

Next Information Receipt
7700

Next Participation Action
7800

End 7900

# FIG. 8

8000

Start 8100

Information Page(s) Communication
8200

User Input Processing
8300

Information Generation
8400

Information Communication
8500

End 8600

9000

```
        ┌─────────────────┐
        │  Start 9100     │
        └────────┬────────┘
                 │
                 ▼
   ┌─────────────────────────────────┐
   │ Transaction Page(s) Communication│
   │              9200               │
   └────────────────┬────────────────┘
                    │
                    ▼
   ┌─────────────────────────────────┐
   │  Secure Transaction Verification │
   │              9300               │
   └────────────────┬────────────────┘
                    │
                    ▼
   ┌─────────────────────────────────┐
   │    Merchant Communication       │
   │              9400               │
   └────────────────┬────────────────┘
                    │
                    ▼
             ◇ Complete          FIG. 9
   Yes─────── Transaction?
             9500
                    │No
                    ▼
   ╱─────────────────────────────────╱
   ╱     Incomplete Transaction       ╱
   ╱              9600                ╱
   ╱─────────────────────────────────╱
                    │
                    ▼
      No───── ◇ Complete Now?
                  9700
                    │Yes
                    ▼
   ┌─────────────────────────────────┐
   │    Transaction Completion       │
   │              9800               │
   └────────────────┬────────────────┘
                    │
                    ▼
   ┌─────────────────────────────────┐
   │   State Information Storage      │
   │              9900               │
   └────────────────┬────────────────┘
                    │
                    ▼
            ┌──────────────┐
            │  End 9995    │
            └──────────────┘
```

FIG. 9

# FIG. 10

# FIG. 11

~11000

Start <u>11100</u>

Reference Selection
<u>11200</u>

Reference Location Determination
<u>11300</u>

Indexical Reference Encoding
<u>11400</u>

End <u>11500</u>

12000

Video Production
Communicating Device
1800

Reproducing Apparatus
1300

Display
1200

Selection Device
1700

Data Storage
12600

First Server
12500

Data Network
1400

Data Storage
12900

Second Server
12800

FIG. 12

─15000

```
         ┌─────────────┐
         │ Start 15050 │
         └─────────────┘
                │
                ▼
    ╱─────────────────────────╲
    │ Indexical Reference Request │
    │         15100             │
    ╲─────────────────────────╱
                │
                ▼
    ┌─────────────────────────┐
    │ Trigger URI Parameter(s) Extraction │
    │         15150             │
    └─────────────────────────┘
                │
                ▼
    ┌─────────────────────────┐
    │ Trigger URI Properties Retrieval │
    │         15200             │
    └─────────────────────────┘
                │
                ▼
    ┌─────────────────────────┐
    │     Project Lookup        │
    │         15250             │
    └─────────────────────────┘
                │
                ▼
    ┌─────────────────────────┐
    │ Project Properties Retrieval │
    │         15300             │
    └─────────────────────────┘
                │
                ▼
    ┌─────────────────────────┐
    │    Parameter Lookup       │
    │         15350             │
    └─────────────────────────┘
                │
                ▼
    ┌─────────────────────────┐
    │    Parameter Storage      │
    │         15400             │
    └─────────────────────────┘
                │
                ▼
      ◇─────────────────────◇
 Yes ◇ Remaining Parameters? ◇
      ◇        15450          ◇
      ◇─────────────────────◇
                │ No
                ▼
    ┌─────────────────────────┐
    │   Second URI Generation   │
    │         15500             │
    └─────────────────────────┘
                │
                ▼
    ┌─────────────────────────┐
    │    Request Redirection    │
    │         15600             │
    └─────────────────────────┘
                │
                ▼
    ╱─────────────────────────╲
    │        Response           │
    │         15700             │
    ╲─────────────────────────╱
                │
                ▼
         ┌─────────────┐
         │  End 15800  │
         └─────────────┘
```

FIG. 13

# FIG. 14

15500

Start 15505

Protocol and Initial Path Addition
15510

Remaining Parameters? 15520

No

Yes

Parameter Retrieval
15530

Parameter Value? 15540

Yes

No

Parameter Value Assignment
15560

Empty String Assignment
15550

Pair Concatenation
15570

Initial Resource Concatenation
15580

End 15590

# FIG. 15

17000

Video Production
Storage Medium
17500

Encoding Controller
17100

Video Production
Recorder
17400

Video
Production Player
17200

Resource
Identifier Encoder
17300

# FIG. 16

18000

Start 18100

Video Production Name Input
18200

Encoding Series Start Input
18300

Encoding Series Pattern Input
18400

Encoding Series Storage
18500

Yes

Remaining
Series?
18600

No

Encoding Initiation
18700

Resource Identifier Encoding
18800

No

Encoding
Complete?
18900

Yes

End 18950